# EUROPEAN PATENT APPLICATION

(11) **EP 4 753 278 A1**
(43) Date of publication of application: **03.06.2026**
(21) Application number: 24856604.4
(22) Date of filing: 05.06.2024
(51) Int. Cl.: H04N 23/73, H04N 23/45, H04N 23/63, H04N 23/57

(54) **ELECTRONIC DEVICE COMPRISING PLURALITY OF CAMERAS, AND OPERATING METHOD THEREOF**

(30) Priority: 21.08.2023 KR 20230108976; 15.11.2023 KR 20230158179
(71) Applicant: Samsung Electronics Co., Ltd., Suwon-si, Gyeonggi-do 16677 (KR)
(72) Inventor: PARK, Kyoungkeun, Suwon-si, Gyeonggi-do 16677 (KR); OH, Byungil, Suwon-si, Gyeonggi-do 16677 (KR); KIM, Bosung, Suwon-si, Gyeonggi-do 16677 (KR); KIM, Jihyun, Suwon-si, Gyeonggi-do 16677 (KR); PARK, Minyoung, Suwon-si, Gyeonggi-do 16677 (KR); JEONG, Jaeoh, Suwon-si, Gyeonggi-do 16677 (KR)
(74) Representative: Nederlandsch Octrooibureau
(86) International application number: PCT/KR2024/007723
(87) International publication number: WO 2025/041988

(57) **Abstract**

An electronic device according to an embodiment may comprise: a plurality of image sensors; memory; and at least one a processor electrically connected to the plurality of image sensors and the memory. The at least one processor may obtain image frames output from each of the plurality of image sensors and a time stamp of each of the image frames in response to a photographing start event; control a timing at which an image frame of at least one of the plurality of image sensors is output on the basis of the obtained time stamp to control at least one of the plurality of image sensors such that image frames output afterward are output at least at one or more different time points, obtain information about a photographing environment of each of the image frames, determine an exposure value of each of the plurality of image sensors such that at least two of the plurality of image sensors have different exposure values in response to a change in the information about the photographing environment of at least one of the image frames, and obtain an image frame from the plurality of image sensors on the basis of the determined exposure value corresponding to the changed information about the photographing environment. Other various embodiments identified through the specification are possible.

## Description

### [Technical Field]

Various embodiments disclosed in this document relate to an electronic device including a plurality of cameras and an operating method therefor.

### [Background Art]

With the recent advancement of digital technology, various types of electronic devices, such as mobile communication terminals, personal digital assistants (PDAs), electronic organizers, smartphones, tablet PCs (personal computers), and/or wearable devices, are being widely used. The hardware and software of electronic devices are continuously being improved to support and enhance their functionalities.

For example, an electronic device may display an image captured by a built-in camera as a preview image in preview mode. Furthermore, the electronic device may obtain a photographing start command from a user pressing a photographing button (e.g., a shutter button) and store the image captured by the camera after the user presses the photographing button.

The electronic device may include an electronic device capable of being worn on the user's face, such as a head-mounted device (HMD). Head-mounted devices may be effectively utilized for implementing virtual reality, augmented reality, and/or mixed reality. For example, electronic devices may provide stereoscopic images of virtual spaces within games enjoyed on televisions or computer monitors, while blocking the image of the actual space the user is in, thereby creating a virtual reality experience. For example, electronic devices may create augmented reality to provide the user with a variety of visual information by implementing a virtual image, while providing an environment where the user is able to visually perceive the actual image of the space they are in.

The above-described information may be provided as background technology (related art) for the purpose of facilitating an understanding of the present disclosure. No assertion or determination is made as to whether any of the above-described content may be applicable as prior art with respect to the present disclosure.

### [Disclosure of Invention]

### [Solution to Problem]

An electronic device according to an embodiment may include a plurality of image sensors, memory, and a processor electrically connected to the plurality of image sensors and the memory. The at least one processor may obtain image frames respectively output from the plurality of image sensors and time stamps for the respective image frames in response to a capturing start event, control a timing at which an image frame of at least one of the plurality of image sensors is output, based on the obtained time stamps, so as to control at least one of the plurality of image sensors to output subsequent image frames at one or more different time points, obtain information about the capturing environment of each of the image frames, determine respective exposure values of the plurality of image sensors, in response to a change in the information about the capturing environment of at least one of the image frames, so that two or more of the plurality of image sensors have different exposure values, and obtain image frames from the plurality of image sensors, based on the determined exposure values corresponding to the changed information about the capturing environment.

An operating method of an electronic device including a plurality of image sensors according to an embodiment may include obtaining image frames respectively output from the plurality of image sensors and time stamps for the respective image frames in response to a capturing start event, controlling a timing at which an image frame of at least one of the plurality of image sensors is output, based on the obtained time stamps, so as to control at least one of the plurality of image sensors to output subsequent image frames at one or more different time points, obtaining information about the capturing environment of each of the image frames, determining respective exposure values of the plurality of image sensors, in response to a change in the information about the capturing environment of at least one of the image frames, so that two or more of the plurality of image sensors have different exposure values, and obtaining image frames from the plurality of image sensors, based on the determined exposure values corresponding to the changed information about the capturing environment.

### [Brief Description of Drawings]

FIG. 1 is a perspective view of an electronic device according to an embodiment.
FIG. 2 is a perspective view of the electronic device in FIG. 1 when viewed from another direction.
FIG. 3 illustrates the structure of an electronic device and a camera module according to an embodiment.
FIG. 4 is a block diagram of an electronic device according to an embodiment.
FIG. 5 is a diagram illustrating time stamps of respective image frames obtained from a first image sensor and time stamps of respective image frames obtained from a second image sensor over time.
FIG. 6 is a flowchart illustrating the operation of an electronic device according to an embodiment.
FIG. 7 is a flowchart illustrating an operation of controlling a plurality of image sensors according to an embodiment.
FIG. 8 is a diagram illustrating time stamps of respective image frames obtained from a plurality of image sensors over time according to an embodiment.
FIG. 9 is a diagram illustrating an operation of determining an exposure value for each of a first image sensor and a second image sensor and obtaining subsequent image frames based on the determined exposure value according to an embodiment.
FIG. 10A is a diagram illustrating an operation of determining an exposure value for each of a plurality of image sensors and obtaining subsequent image frames based on the determined exposure value according to an embodiment.
FIG. 10B is a diagram illustrating an operation of determining an exposure value when image frames are obtained from a first image sensor and a second image sensor at the same time point according to an embodiment.
FIG. 11 is a diagram illustrating an operation of controlling a plurality of image sensors when a capture event occurs according to an embodiment.
FIG. 12 is a flowchart illustrating the operation of an electronic device when a capture event occurs according to an embodiment.
FIG. 13 is a flowchart illustrating an operation of outputting a preview image according to an embodiment.
FIG. 14 is a conceptual diagram illustrating a concept of controlling a function related to capturing in an electronic device according to an embodiment.
FIG. 15 is a diagram comparing a case where image frames are not output at one or more different time points and a case where image frames are output at one or more different time points according to an embodiment.
FIG. 16 is a diagram for comparing a case where image frames are not output at one or more different time points and a case where image frames are output at one or more different time points according to one embodiment.
FIG. 17 is a block diagram of an electronic device in a network environment according to various embodiments.
FIG. 18 is a block diagram illustrating a camera module according to various embodiments.

In the description of the drawings, the same or similar reference numerals may be used to designate the same or similar components.

### [Mode for the Invention]

Hereinafter, various embodiments of the present disclosure will be described with reference to the accompanying drawings. However, this is not intended to limit the present disclosure to specific embodiments, and it should be understood that the present disclosure includes various modifications, equivalents, and/or alternatives of the embodiments.

An electronic device according to various embodiments of the present disclosure may include, for example, at least one of a smartphone, a tablet personal computer (tablet PC), a mobile phone, a video phone, an e-book reader, a desktop personal computer (desktop PC), a laptop personal computer (laptop PC), a netbook computer, a workstation, a server, a personal digital assistant (PDA), a portable multimedia player (PMP), an MP3 player, a mobile medical device, a camera, or a wearable device. According to various embodiments, the wearable device may include at least one of an accessory-type device (e.g., a watch, ring, bracelet, anklet, necklace, glasses, contact lenses, or a head-mounted device (HMD)), a textile- or clothing-integrated device (e.g., electronic apparel), a body-attached device (e.g., a skin pad or tattoo), or a bio-implantable device (e.g., an implantable circuit).

In some embodiments, the electronic device may be a home appliance. The home appliance may include, for example, at least one of a television, a DVD (digital video disk) player, an audio device, a refrigerator, an air conditioner, a vacuum cleaner, an oven, a microwave oven, a washing machine, an air purifier, a set-top box, a home automation control panel, a security control panel, a TV box, a game console, an electronic dictionary, an electronic key, a camcorder, or a digital photo frame.

In one embodiment, the electronic device may include at least one of various medical devices (e.g., portable medical measuring devices such as a blood glucose meter, a heart rate monitor, a blood pressure monitor, or a thermometer, magnetic resonance angiography (MRA) equipment, magnetic resonance imaging (MRI) equipment, computed tomography (CT) equipment, imaging devices, or ultrasonic devices), a navigation device, a global navigation satellite system (GNSS), an event data recorder (EDR), a flight data recorder (FDR), an automotive infotainment device, marine electronic equipment (e.g., a marine navigation device or a gyrocompass), avionics equipment, a security device, a vehicle head unit, an industrial or household robot, an automatic teller machine (ATM) of a financial institution, a point-of-sale (POS) device of a store, or an Internet of Things (IoT) device (e.g., a light bulb, various sensors, an electricity or gas meter, a sprinkler system, a fire alarm, a thermostat, a streetlight, a toaster, exercise equipment, a hot water tank, a heater, or a boiler).

According to some embodiments, the electronic device may include at least one of furniture or a part of a building/structure, an electronic board, an electronic signature receiving device, a projector, or various measuring instruments (e.g., water, electricity, gas, or electromagnetic wave measuring instruments). In various embodiments, the electronic device may be one of the aforementioned devices or a combination of two or more thereof. An electronic device according to some embodiments may be a flexible electronic device. In addition, the electronic device according to the embodiments of the present disclosure is not limited to the aforementioned devices and may include new electronic devices developed in accordance with technological advances.

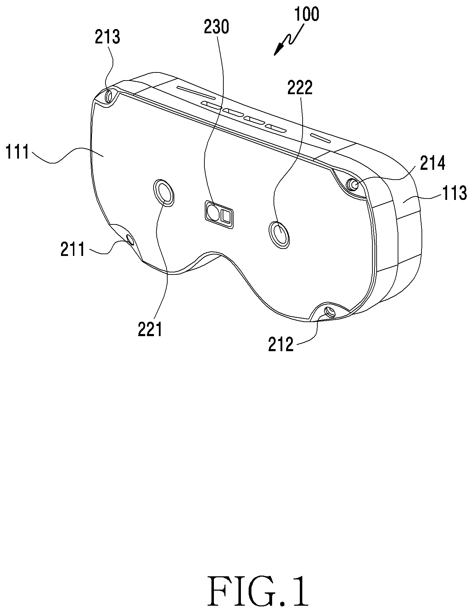

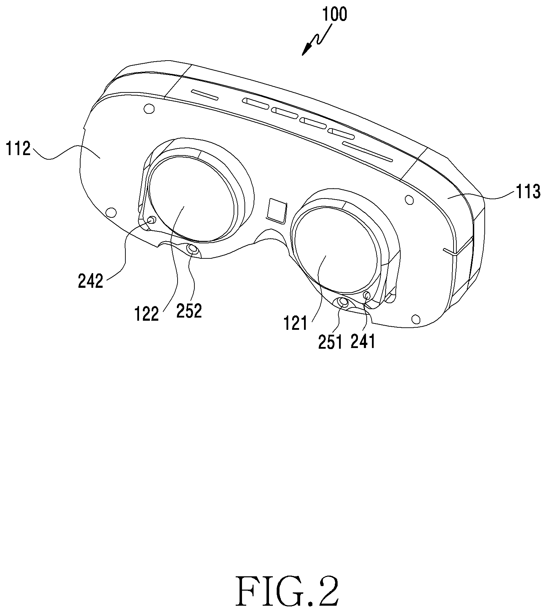

FIG. 1 is a perspective view of an electronic device 100 according to an embodiment. FIG. 2 is a perspective view of the electronic device 100 in FIG. 1 viewed from another direction.

Referring to FIGS. 1 and 2, the electronic device 100 according to an embodiment is a glasses-type electronic device that allows a user to visually perceive surrounding objects or the environment while wearing the electronic device 100. For example, the electronic device 100 may be a head-mounted device (HMD) or smart glasses capable of providing images directly in front of the user's eyes.

According to an embodiment, the electronic device 100 may include a housing that forms the exterior of the electronic device 100. The housing may provide a space in which components of the electronic device 100 may be disposed. For example, the housing may include a front surface 111, a rear surface 112, and a side surface 113 surrounding at least a portion of a space between the front surface 111 and the rear surface 112.

According to an embodiment, the electronic device 100 may include at least one display member disposed within the housing and capable of outputting a visual image. For example, the electronic device 100 may include at least one display member capable of providing visual information (or images) to the user. For example, the electronic device 100 may include a first display member 121 and a second display member 122. At least one display member may include a module equipped with a lens, a display, a waveguide, and/or a touch circuit. According to an embodiment, the display member may be formed transparently or translucently. According to an embodiment, the display member may include a translucent glass member or a window member whose light transmittance may be controlled by adjusting the coloring concentration.

According to an embodiment, at least one display member may be disposed at a position corresponding to the user's eyes. In an example, a pair of display members may be provided and disposed to correspond to the user's left and right eyes, respectively, when the electronic device 100 is worn on the user's body. For example, referring to FIG. 2, the display members may include a first display member 121 and a second display member 122 disposed spaced apart from the first display member 121. The first display member 121 may be disposed to correspond to the user's right eye, and the second display member 122 may be disposed to correspond to the user's left eye.

According to an embodiment, the electronic device 100 may include a plurality of camera modules (e.g., a first camera module 221 and a second camera module 222). For example, the electronic device 100, using a camera module, may obtain and/or recognize visual images of objects or environments viewed by the user or in the direction the electronic device 100 is facing. The electronic device 100 may receive information about objects or environments from an external electronic device via a network using the camera module. The electronic device 100 may provide the received information about objects or environments to the user in a visual format through the display member. For example, the electronic device 100 may implement augmented reality and/or mixed reality by visualizing information about objects or environments and combining it with actual images of the user's surroundings.

According to an embodiment, the camera module may capture still images and/or moving images. The camera module may include at least one of a lens, at least one image sensor, an image signal processor, or a flash. According to an embodiment, the camera module may be arranged around the display members 121 and 122.

According to an embodiment, the camera module may include a first camera module 221 and a second camera module 222. According to an embodiment, the first camera module 221 and the second camera module 222 may capture external images. According to an embodiment, the first camera module 221 and the second camera module 222 may capture external images through first optical holes formed in the lens frame. For example, the first camera module 221 and the second camera module 222 may include a high-resolution color camera. For example, the first camera module 221 and the second camera module 222 may be high-resolution (HR) or photo video (PV) cameras. According to an embodiment, the first camera module 221 and the second camera module 222 may provide an auto focus (AF) function and an optical image stabilizer (OIS) function. According to an embodiment, the first camera module 221 and the second camera module 222 may be GS or RS cameras.

According to an embodiment, the first camera module 221 and the second camera module 222 may have the same photographing environment. For example, the first camera module 221 and the second camera module 222 may include pass-through cameras. In an example, the same photographing environment may include a case where the first camera module 221 has a field of view (FOV) that at least partially overlaps the field of view of the second camera module 222.

According to an embodiment, the electronic device may use information obtained through the first camera module 221 and the second camera module 222 as information regarding the photographing environment. For example, when the field of view of the first camera module 221 does not overlap with the field of view of the second camera module 222, the electronic device may use information obtained through the first camera module 221 and the second camera module 222 as information regarding the photographing environment. For example, the electronic device may predict at least one of the user's movement or the illuminance value of the next scene, based on the user's movement information included in the information regarding the photographing environment. The electronic device may determine an exposure value of the image frame, based on the predicted illuminance value.

According to an embodiment, the first camera module 221 and the second camera module 222 may be used to preview the actual scene for a video see-through (VST) operation. According to an embodiment, the first camera module 221 and the second camera module 222 may be used to reinforce distance information with respect to a subject. According to an embodiment, the first camera module 221 and the second camera module 222 may also be used to recognize an object through a 2D image obtained by capturing the scene. According to an embodiment, the first camera module 221 and the second camera module 222 may include at least one of a HeT camera, a HaT camera, or an FT camera. However, the disclosure is not limited thereto.

According to an embodiment, the preview images obtained through the first camera module 221 and the second camera module 222 may be displayed through the display members 121 and 122. For example, the preview image obtained through the first camera module 221 may be displayed through the first display member 121, and the preview image obtained through the second camera module 222 may be displayed through the second display member 122.

According to an embodiment, the electronic device 100 may include a flash (not shown) disposed adjacent to the first camera module 221 and the second camera module 222. For example, the flash (not shown) may provide light to increase the brightness (e.g., illuminance) of the surroundings of the electronic device 100 when the first camera module 221 and the second camera module 222 obtain external images. The flash (not shown) may reduce difficulties in obtaining images due to dark environments, the mixing of various light sources, and/or light reflection.

According to an embodiment, the camera module may include a third camera module 230. According to an embodiment, the third camera module 230 may be used to identify the distance to a subject.

According to an embodiment, the camera module may include fourth camera modules 241 and 242. According to an embodiment, the fourth camera modules 241 and 242 may capture the trajectory of the user's eye (e.g., pupil) or gaze. For example, the fourth camera modules 241 and 242 may include a light-emitting unit (e.g., IR LED) (not shown) configured to emit light in the infrared band and a camera structure (not shown) configured to capture the reflection pattern of light emitted by the light-emitting unit toward the user's eye. According to an embodiment, the processor may adjust the position of a virtual image projected on the display members 121 and 122 so that the virtual image corresponds to the direction in which the user's eyes are looking. According to an embodiment, the fourth camera module 241 and 242 may track the trajectory of the user's eyes or gaze using a plurality of fourth camera modules of the same specification and performance.

According to an embodiment, the fourth camera modules 241 and 242 may periodically or aperiodically transmit information related to the trajectory of the user's eyes or gaze (e.g., trajectory information) to the processor. According to an embodiment, the fourth camera modules 241 and 242 may transmit the trajectory information to the processor, based on detecting a change in the user's gaze (e.g., the eyes move more than a reference value while the head remains stationary), based on the trajectory information.

According to an embodiment, fifth camera modules 251 and 252 may be used to detect the user's facial expression. In an example, the fifth camera modules 251 and 252 may include a face tracking (FT) camera.

According to an embodiment, the camera module may include sixth camera modules 211, 212, 213, and 214. According to an embodiment, the sixth camera module may capture a user's actions through a second optical hole formed in the lens frame. For example, the sixth camera module may capture a user's gesture (e.g., hand gesture). The sixth camera modules may be disposed at both lateral ends of the housing. For example, the sixth camera modules may be disposed at both ends of the housing, respectively. According to an embodiment, the sixth camera module may be a global shutter (GS) camera. For example, the sixth camera module may be a camera supporting 3 degrees of freedom (DoF) or 6DoF, and provide 360-degree spatial (e.g., omnidirectional), position recognition, and/or movement recognition. According to an embodiment, the sixth camera module may perform simultaneous localization and mapping (SLAM) and user movement recognition using a plurality of global shutter cameras of the same specifications and performance as a stereo camera. According to an embodiment, the sixth camera module may include an infrared (IR) camera (e.g., a time-of-flight (TOF) camera or a structured light camera). For example, the IR camera may operate as at least part of a sensor module for detecting the distance to a subject.

According to an embodiment, the third camera module, the fourth camera module, the fifth camera module, and/or the sixth camera module may include a plurality of camera modules. The electronic device 100 may include a plurality of camera modules having different properties (e.g., field of view) or functions from each other. The electronic device 100 may perform control to change the field of view of the camera module, based on a user's selection and/or trajectory information. For example, at least one of the plurality of camera modules may be a wide-angle camera, and at least another may be a telephoto camera.

According to an embodiment, the processor may determine the movement of the electronic device 100 and/or the movement of the user using information of the electronic device 100 obtained using at least one of a gesture sensor, a gyro sensor, or an acceleration sensor of the sensor module and a user's action (e.g., the user's body approaching the electronic device 100) obtained using the sixth camera modules 211, 212, 213, and 214. According to an embodiment, the electronic device 100 may include, in addition to the sensors described above, a magnetic (geomagnetic) sensor capable of measuring a direction using a magnetic field and magnetism, and/or a Hall sensor capable of obtaining movement information (e.g., a moving direction or moving distance) using the strength of a magnetic field. For example, the processor may determine the movement of the electronic device 100 and/or the user's movement, based on information obtained from the magnetic (geomagnetic) sensor and/or the Hall sensor.

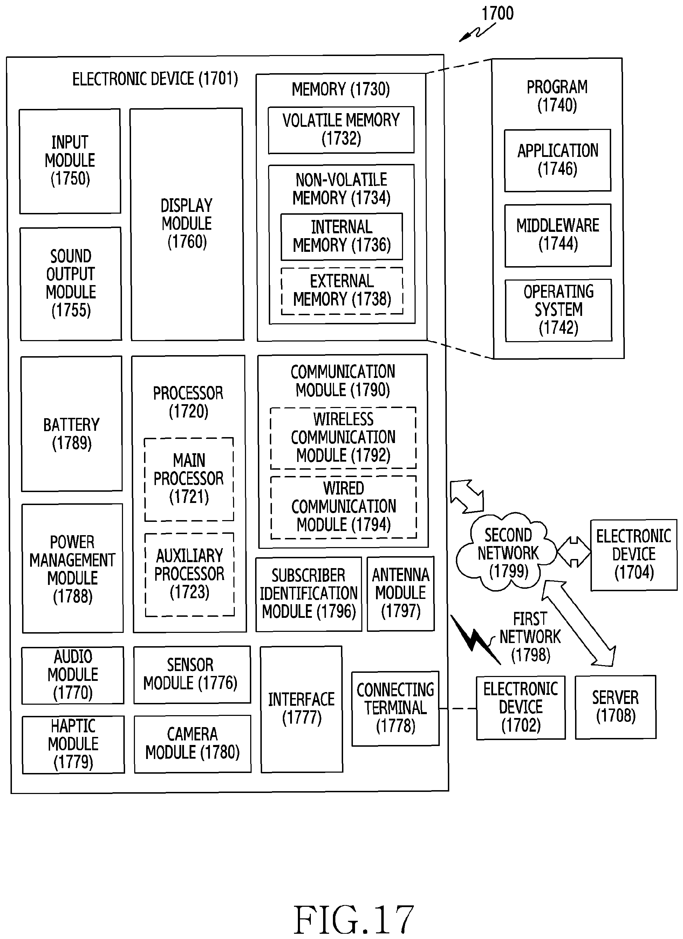

According to an embodiment, the electronic device 100 may perform input functions (e.g., touch and/or pressure sensing functions) that enable interaction with a user. For example, components (e.g., touch sensors and/or pressure sensors) configured to perform touch and/or pressure sensing functions may be disposed on at least a portion of the electronic device 100. The electronic device 100 may control a virtual image output through the display members 121 and 122, based on information obtained through the components. For example, sensors related to the touch and/or pressure sensing functions may be configured in various ways, such as a resistive type, a capacitive type, an electromagnetic induction (EM) type, or an optical type. According to an embodiment, the components configured to perform the touch and/or pressure sensing functions may be partially or entirely identical to the configuration of the input module 1750 in FIG. 17.

According to an embodiment, the electronic device 100 may include a circuit board (e.g., a printed circuit board (PCB), a printed board assembly (PBA), a flexible PCB (FPCB), or a rigid-flexible PCB (RFPCB)) that accommodates components for driving the electronic device 100. For example, the circuit board may include at least one integrated circuit chip. At least one of a processor (not shown), memory (not shown), a power management module (not shown), or a communication module may be provided on the integrated circuit chip. According to an embodiment, the circuit board may be disposed within the housing. For example, the circuit board may include a first circuit board and a second circuit board. According to an embodiment, the communication module may be mounted on the first circuit board, and the processor may be mounted on the second circuit board. According to an embodiment, the circuit board may be electrically connected to a battery via a power transmission structure. According to an embodiment, the circuit board 241 may be an interposer board.

According to an embodiment, the electronic device 100 may include a battery. The battery may be electrically connected to components of the electronic device 100. The battery may supply power to components of the electronic device 100.

According to an embodiment, the disclosure may be applied to an electronic device including a plurality of camera modules (e.g., a first camera module and a second camera module) with the same photographing environment. For example, the electronic device of the disclosure may perform control such that image frames are output from the respective image sensor included in the plurality of camera modules at one or more different time points. When the electronic device of the disclosure detects a change in the photographing environment (e.g., a change in the detected illuminance value of the photographing environment), the electronic device may quickly derive an exposure value corresponding to the information about the photographing environment (e.g., the illuminance value of the photographing environment), based on the exposure values of the respective image frames output at one or more different time points.

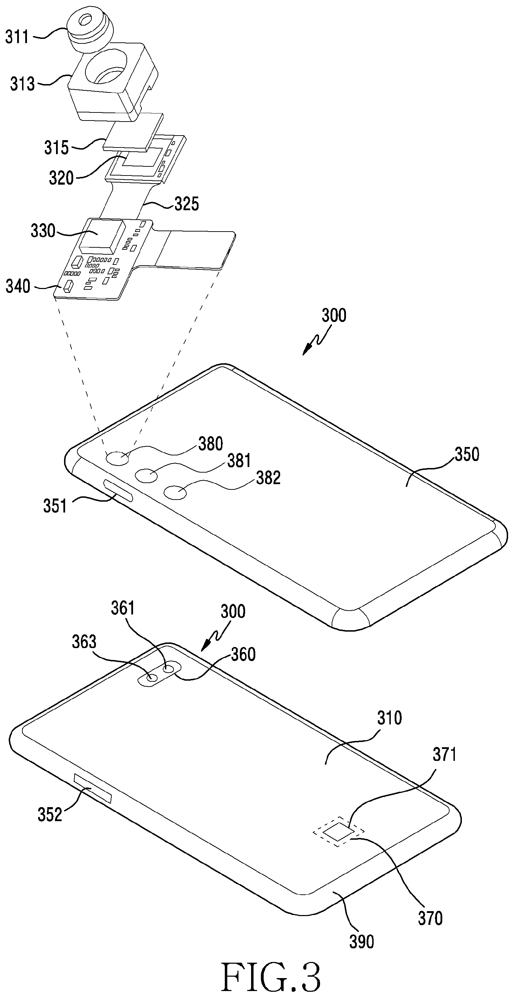

FIG. 3 illustrates the structure of an electronic device 300 and a camera module according to an embodiment.

The electronic device 300 and the camera module in FIG. 3 may be referenced by the electronic device 100 and the camera modules in FIGS. 1 and 2.

FIG. 3 is a schematic diagram of an exterior of an electronic device 300 equipped with a first camera module 380 and the first camera module 380, according to an embodiment. Although the embodiment in FIG. 3 is illustrated and described based on a mobile device, such as a smartphone, it will be readily apparent to those skilled in the art that the embodiment may be applied to any electronic device equipped with a camera, including various electronic devices or mobile devices.

Referring to FIG. 3, a display 310 may be disposed on the front surface of the electronic device 300 according to an embodiment. In an embodiment, the display 310 may occupy most of the front surface of the electronic device 300. The front surface of the electronic device 300 may include a display 310 and a bezel 390 surrounding at least a portion of the edge of the display 310. The display 310 may include a flat area and a curved area extending from the flat area toward the lateral surface of the electronic device 300. The electronic device 300 illustrated in FIG. 3 is an example, and various embodiments are possible. For example, the display 310 of the electronic device 300 may include only a flat area without a curved area, or may have a curved area on only one edge rather than both sides. Furthermore, in an embodiment, the curved area may extend to the rear surface of the electronic device 300, thereby providing the electronic device 300 with an additional flat area.

According to an embodiment, the electronic device 300 may further include a speaker (not shown), a receiver (not shown), a front camera 361, a proximity sensor (not shown), and/or a home key (not shown). The electronic device 300 according to an embodiment may be provided with a rear cover 350 integrated with the main body of the electronic device. In an embodiment, the rear cover 350 may be detachable from the main body of the electronic device 300, enabling replacement of the battery. The rear cover 350 may also be referred to as a battery cover or a back cover.

According to an embodiment, a fingerprint sensor 371 for user fingerprint recognition may be included in the first area 370 of the display 310. When viewing the display 310 from the front, the fingerprint sensor 371 may be disposed below the display 310, making it difficult or impossible for the user to recognize the fingerprint sensor. Furthermore, in addition to the fingerprint sensor 371, an additional sensor for user/biometric authentication may be disposed in an area of the display 310. In an embodiment, the sensor for user/biometric authentication may be disposed in an area of the bezel 390. For example, an IR (infrared) sensor for iris authentication may be exposed through an area of the display 310 or an area of the bezel 390.

In an embodiment, a front camera 361 may be disposed in the second area 360 on the front surface of the electronic device 300. Although the front camera 361 is depicted as being visually exposed through an area of the display 310 in the embodiment in FIG. 3, the front camera 361 may be visually exposed through the bezel 390 in an embodiment. In an embodiment (not shown), the display 310 may include at least one or more of an audio module, a sensor module (e.g., a sensor 363), a camera module (e.g., a front camera 361), and a light-emitting element (not shown) on the back surface of the second area 360. For example, a camera module may be disposed on the front and/or lateral surface of the electronic device 300 so as to face the front and/or side. For example, the front camera 361 may be an under-display camera (UDC) that is not visually exposed to the second area 360.

In an embodiment, the electronic device 300 may include one or more front cameras 361. For example, the electronic device 300 may include two front cameras, such as a first front camera and a second front camera. In an embodiment, the first front camera and the second front camera may be cameras of the same type with equivalent specifications (e.g., pixels). However, in an embodiment, the first front camera and the second front camera may be implemented as cameras with different specifications. The electronic device 300 may support dual camera-related functions (e.g., 3D shooting, auto focus, etc.) through two front cameras. The description of the front camera mentioned above may be applied identically or similarly to the rear camera of the electronic device 300.

In an embodiment, the electronic device 300 may further include various hardware or sensors 363 that assist in capturing, such as a flash. For example, the electronic device 300 may include a distance sensor (e.g., a time-of-flight (TOF) sensor) for detecting the distance between a subject and the electronic device 300. The distance sensor may be applied to both the front camera 361 and/or the rear camera. The distance sensor may be separately disposed or included in the front camera 361 and/or the rear camera.

In an embodiment, at least one physical key may be disposed on the lateral side of the electronic device 300. For example, a first function key 351 for turning the display 310 on/off or powering the electronic device 300 on/off may be disposed on the right edge of the front surface of the electronic device 300. In an embodiment, a second function key 352 for controlling the volume or screen brightness of the electronic device 300 may be disposed on the left edge of the front surface of the electronic device 300. In addition, additional buttons or keys may be disposed on the front or rear surface of the electronic device 300. For example, a physical button or touch button mapped to a specified function may be disposed in the lower area of the front bezel 390.

The electronic device 300 illustrated in FIG. 3 is merely an example and does not limit the configuration of a device to which the technical concepts disclosed in this disclosure are applied. For example, the technical concepts of the disclosure may be applied to foldable electronic devices capable of being folded horizontally or vertically by employing a flexible display and a hinge structure, rollable electronic devices capable of being rolled, tablets, or laptops.

Referring to FIG. 3, the electronic device 300 according to an embodiment may include a plurality of camera modules. For example, the electronic device 300 may include a first camera module 380, a second camera module 381, and/or a third camera module 382. However, the electronic device 300 may exclude at least one of the aforementioned camera modules, or may further include at least one camera module. The description of the first camera module 380, which will be described below, may refer to the description of the second camera module 381 and/or the third camera module 382.

According to an embodiment, the first camera module 380 may include a lens assembly 311, a housing 313, an infrared cut filter 315, and/or an image sensor 320. The electronic device 300 may include an image signal processor (ISP) 330 electrically connected to the image sensor 320. In an embodiment, the image signal processor 330 may be understood as being included in the first camera module 380, or in an embodiment, the image signal processor 330 may be understood as being configured to be included in a processor (e.g., the processor 210 in FIG. 2) separate from the first camera module 380.

In an embodiment, the lens assembly 311 may have different numbers, arrangements, and/or types of lenses depending on the front camera 361 and the rear camera. Depending on the type of lens assembly 311, the front camera 361 and the rear camera may have different properties (e.g., focal length and maximum magnification). The lens assembly 311 may move forward and backward along an optical axis (not shown) and may operate to change the focal length so that a target object, which is a subject, may be captured clearly.

In an embodiment, the first camera module 380 may include a barrel (not shown) including the lens assembly 311 aligned along the optical axis, and a housing 313 including at least one coil (not shown) and/or a magnet (not shown) surrounding the barrel around the optical axis (not shown). In an embodiment, the first camera module 380 may perform an image stabilization function (e.g., optical image stabilization (OIS)) of an image obtained by the image sensor 320 using at least one coil and/or magnet included in the housing 313. For example, at least one coil and magnet may interact electromagnetically with each other under the control of a control circuit. For example, the first camera module 380 may, under the control of a processor, control the direction and/or intensity of the current passing through at least one coil to control an electromagnetic force, and may, using the Lorentz force generated by the electromagnetic force, move (or rotate) at least a portion of the lens assembly 311 and a lens carrier (not shown) including the lens assembly 311 in a direction substantially perpendicular to the optical axis (not shown).

In an embodiment, the first camera module 380 may use another method for the image stabilization function. For example, the first camera module 380 may use video digital image stabilization (VDIS). In an embodiment, the first camera module 380 may include a method for compensating for image shake by performing software processing on data output values of the image sensor 320. For example, the first camera module 380 may extract a motion vector, based on the difference between frames of an image (different images) through VDIS, a digital image stabilization, and increase clarity through image processing. Furthermore, the first camera module 380 may extract a motion vector, based on the image through VDIS, thereby recognizing the movement of the subject itself as shaking in addition to the shaking of the electronic device 300. In the disclosure, the camera module may be referred to as a camera device.

In an embodiment, the infrared cut filter 315 may be disposed on the upper surface of the image sensor 320. For example, the infrared cut filter 315 may be disposed between the image sensor 320 and the lens assembly 311. Therefore, the image of the subject passing through the lens assembly 311 may be partially filtered by the infrared cut filter 315 and then detected by the image sensor 320.

In an embodiment, the image sensor 320 may be disposed on the upper surface of a printed circuit board 340 (e.g., a printed circuit board (PCB), a printed board assembly (PBA), a flexible PCB (FPCB), or a rigid-flexible PCB (RFPCB)). The image sensor 320 may be electrically connected to an image signal processor 330 connected to the printed circuit board 340 via a connector 325. A flexible printed circuit board (FPCB) or a cable may be used as the connector 325.

In an embodiment, the image sensor 320 may be a complementary metal oxide semiconductor (CMOS) sensor or a charged coupled device (CCD) sensor. The image sensor 320 may have a plurality of pixels individually integrated, and each pixel may include a micro lens, a color filter, and/or a photodiode. Each pixel is a photodetector capable of converting input light into an electrical signal. The photodetector may include a photodiode (PD). For example, the image sensor 320 may amplify the current generated according to the photoelectric effect of a light-receiving device for the light received through the lens assembly 311. For example, each pixel may include a photoelectric transformation element (or position sensitive detector (PSD)) and a plurality of transistors.

In an embodiment, optical information of a subject incident through the lens assembly 311 may be converted into an electrical signal by the image sensor 320 and input to the image signal processor 330.

In an embodiment, if the image signal processor 330 and the image sensor 320 are physically separated, a sensor interface conforming to an appropriate standard may electrically connect the image sensor 320 and the image signal processor 330.

In an embodiment, the image signal processor 330 may perform image processing on electrically converted image data. The image processing operation in the image signal processor 330 may be divided into pre-ISP (hereinafter, "pre-processing") and the ISP chain (hereinafter, "post-processing"). Image processing prior to the demosaicing operation may refer to pre-processing, and image processing after the demosaicing operation may refer to post-processing. The pre-processing operation may include 3A processing, lens shading correction, edge enhancement, dead pixel correction, and/or knee correction. The 3A may include at least one of auto white balance (AWB), auto exposure (AE), and auto focusing (AF). The post-processing operation may include at least one of changing a sensor index value, changing a tuning parameter, and adjusting an aspect ratio. The post-processing operation may include an operation of processing image data output from the image sensor 320 or image data output from a scaler. The image signal processor 330 may adjust at least one of contrast, sharpness, saturation, and dithering of the image through the post-processing operation. Here, the contrast, sharpness, and/or saturation adjustment procedures may be performed in a YUV color space, and the dithering procedure may be performed in an RGB (red, green, blue) color space. Some of the pre-processing operations may be performed in the post-processing operation, or some of the post-processing operations may be performed in the pre-processing operation. Furthermore, some of the pre-processing operations may overlap with some of the operations in the post-processing operation.

In an embodiment, the first camera module 380 may be disposed on the front surface as well as the rear surface of the electronic device 300. Furthermore, the electronic device 300 may include a plurality of camera modules in addition to a single first camera module 380 to enhance camera performance. For example, the electronic device 300 may further include a front camera 361 for video calling or selfie shooting. The front camera 361 may support a lower pixel count than the rear camera module. The front camera 361 may be smaller than the first camera module 380 of the rear camera. For example, the electronic device 300 may further include a second camera module 381 and/or a third camera module 382. In an example, the disclosure may be applied to a first camera module 380, a second camera module 381, and/or a third camera module 382 of the electronic device 300.

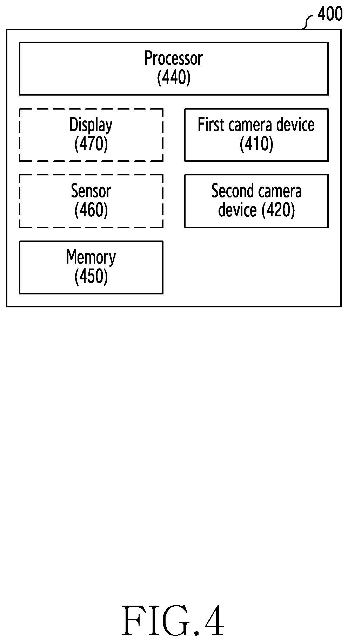

FIG. 4 is a block diagram of an electronic device 400 according to an embodiment.

The electronic device 400 in FIG. 4 may be referenced by the electronic devices 100 in FIGS. 1 and 2, and the electronic device 300 in FIG. 3.

Referring to FIG. 4, the electronic device 400 may include a first camera device 410, a second camera device 420, memory 450, a display 470, and/or a sensor 460. However, the components of the electronic device 400 are not limited thereto. For example, the electronic device 400 may exclude at least one of the above-described components, or may further include at least one other component. For example, the electronic device 400 may exclude the sensor 460 and/or the display 470.

According to an embodiment, the processor 440 may perform calculations or data processing related to control and/or communication of at least one other component of the electronic device 400 using instructions stored in the memory 450 of the electronic device 400. According to an embodiment, the processor 440 may be understood to include at least one processor. For example, the processor 440 may be understood to include at least one of a central processing unit (CPU), a graphics processing unit (GPU), a micro controller unit (MCU), a sensor hub, a supplementary processor, a communication processor, an application processor, an application specific integrated circuit (ASIC), a field programmable gate array (FPGA), an image signal processor (ISP), and/or a communication processor (CP), and may have a plurality of cores.

According to an embodiment, the memory 450 may store instructions that, when executed by the processor 440, process data or control components of the electronic device 400 to perform the operation of the electronic device 400. Furthermore, the memory 450 may store various data by the processor 440. For example, the processor 440 may store various image data obtained through at least one of the first camera device 410 or the second camera device 420 in the memory 450.

According to an embodiment, the memory 450 may be divided into at least one memory area. For example, the memory 450 may include a memory area for storing a plurality of image frames obtained through at least one of the first camera device 410 or the second camera device 420.

In addition, the memory 450 may include a memory area for storing images with improved quality, based on at least one image frame among the plurality of image frames obtained through at least one of the first camera device 410 or the second camera device 420.

According to an embodiment, the memory area for storing the plurality of image frames obtained through at least one of the first camera device 410 or the second camera device 420 may be configured as a buffer memory. However, the disclosure is not limited thereto.

According to an embodiment, the processor 440 may delete some of the data stored in the memory 450. For example, the processor 440 may delete a plurality of image frames stored in the memory 450.

According to an embodiment, the display 470 may include a liquid crystal display (LCD), a light-emitting diode (LED) display, or an organic light-emitting diode (OLED) display. According to an embodiment, the display 470 may display a variety of content (e.g., text, images, videos, icons, and/or symbols). For example, the display 470 may display at least one image among images obtained through at least one of the first camera device 410 or the second camera device 420. Furthermore, the display 470 may display at least one image stored in the memory 450. According to an embodiment, the display 470 may display a preview image.

According to an embodiment, the display 470 may display a user interface related to capturing when capturing is in progress through at least one of the first camera device 410 or the second camera device 420 of the electronic device 400. According to an embodiment, the display 470 may display a visual object (e.g., a capture button) for a capturing command.

According to an embodiment, the processor 440 may obtain a capturing start command via the display 470. For example, the electronic device 400 may perform capturing by receiving a user's touch input on a visual object displayed on the display 470. Furthermore, the processor 440 may obtain at least one capturing command subsequent to the capturing start command through the display 470. According to various embodiments, the processor 440 may obtain a capturing command using various configurations of the electronic device 400 in addition to the display 470.

According to an embodiment, the processor 440 may obtain a capturing start command. According to an embodiment, the processor 440 may determine a capturing command obtained after a specified period of time has elapsed since the last capturing command obtained as a capturing start command. For example, the processor 440 may use a timer to determine whether a capturing start event is obtained after a specified period of time has elapsed.

According to an embodiment, the processor 440 may determine a capturing start event in response to the capturing start command. According to an embodiment, the capturing start event may include an event in which the framerate of at least one image sensor among the plurality of image sensors is less than or equal to a specified value. For example, the capturing start event may include at least one of an event for executing a camera or an event for executing a preview operation. However, the disclosure is not limited thereto. For example, the capturing start event may include a capture event. In an example, the capturing start event may include an event in which the framerate of at least one image sensor among the plurality of image sensors is less than or equal to 30 fps.

According to an embodiment, the processor 440 may obtain a plurality of image frames through at least one of the first camera device 410 or the second camera device 420 in response to the capturing start event. For example, the processor 440 may obtain a plurality of image frames via a plurality of image sensors.

According to an embodiment, the camera module (e.g., the first camera device 410) may include at least one image sensor. The electronic device 400 may include a plurality of camera modules (e.g., the first camera device 410 and the second camera device 420), thereby including a plurality of image sensors. For example, the electronic device 400 may include a first image sensor and a second image sensor. However, the number of image sensors included in the electronic device 400 is not limited thereto.

According to an embodiment, the processor 440 may obtain image frames and time stamps for the respective image frames from the plurality of image sensors, respectively, in response to a capturing start event.

According to an embodiment, the processor 440 may control at least one of the plurality of image sensors, based on the obtained time stamps, such that image frames are output at one or more different time points. For example, the processor 440 may control the timing at which an image frame is output from at least one image of the plurality of image sensors. By controlling the timing at which the image frame is output, subsequent image frames may be output at one or more different time points.

According to an embodiment, the processor 440 may determine the capturing environment. According to an embodiment, the processor 440 may determine the capturing environment using the plurality of image sensors. For example, the processor 440 may determine the capturing environment, based on image frames output from the respective image sensors in response to a capturing start event or a capture event. For example, the processor 440 may determine the capturing environment, including the illumination conditions and/or saturation conditions.

According to an embodiment, the processor 440 may obtain information about the capturing environment. For example, the processor 440 may obtain information about the capturing environment using the image sensors of the camera modules (e.g., the first camera device 410 and the second camera device 420). For example, the processor 440 may obtain information about the capturing environment of each of the image frames output from the plurality of image sensors using the image frames output from the image sensors. In an example, the information about the capturing environment may include information at least about the ambient brightness of the electronic device 400. According to an embodiment, the processor 440 may obtain respective exposure values of the plurality of image sensors.

According to an embodiment, the processor 440 may determine whether the information about the capturing environment of each image frame has changed. For example, the processor 440 may compare information about the capturing environment of an image frame with information about the capturing environment of a subsequent image frame. In an example, a change in the information about the capturing environment may include a change in information about the ambient brightness of the electronic device.

According to an embodiment, in response to a change in the information about the capturing environment of at least one image frame, the processor 440 may determine respective exposure values of the plurality of image sensors so that two or more of the image sensors have different exposure values. For example, based on a change in the information about the ambient brightness of the electronic device, the processor 440 may determine the respective exposure values of the plurality of image sensors so that two or more of the image sensors have different exposure values. In an example, the processor 440 may change the respective exposure values (e.g., the determined exposure value) of the plurality of image sensors so that two or more of the image sensors have different exposure values. For example, the processor 440 may change the respective exposure values of the plurality of image sensors so that the exposure value of each of the plurality of image sensors converges to an exposure value corresponding to the changed information about the capturing environment. According to an embodiment, the processor 440 may obtain subsequent image frames from the plurality of image sensors, based on the determined exposure value. For example, the processor 440 may obtain subsequent image frames from the plurality of image sensors having exposure values corresponding to the changed information about the capturing environment.

According to an embodiment, the processor 440 may display, on the display 470, at least one image frame among the plurality of image frames obtained through at least one of the first camera device 410 or the second camera device 420 as a preview image. According to an embodiment, the processor 440 may store a plurality of image frames obtained through at least one of the first camera device 410 or the second camera device 420 in the memory 450 in response to the capturing start event. For example, the processor 440 may store the plurality of image frames in a buffer memory area of the memory 450. According to an embodiment, the buffer memory area may correspond to an internal data structure. According to an embodiment, the processor 440 may store the plurality of image frames without compression.

According to an embodiment, the processor 440 may obtain a capturing command subsequent to the capturing start command. For example, the processor 440 may obtain a capturing command for continuous shooting. According to an embodiment, the processor 440 may generate an image with improved quality in response to the capturing command.

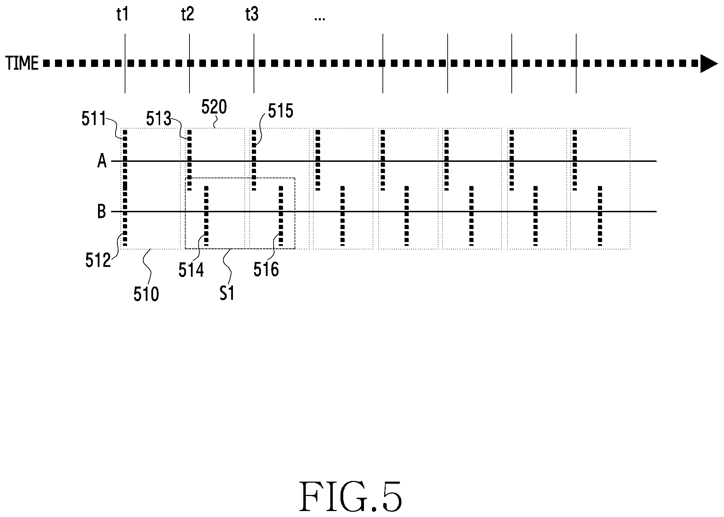

FIG. 5 is a diagram illustrating the time stamps of respective image frames obtained from a first image sensor A and the time stamps of respective image frames obtained from a second image sensor B over time.

The description and components in FIG. 5 may be referenced by the description and components in FIGS. 1 to 4 described above. The same terminology and/or reference numerals are used for components that are identical or substantially identical to those described above, and redundant descriptions thereof will be omitted.

The various embodiments provided in connection with FIG. 5 and the drawings below may be understood to be performed by the electronic device 100 described in FIGS. 1 and 2, the electronic device 300 described in FIG. 3, and the electronic device 400 described in FIG. 4.

According to an embodiment, at least one processor, in response to a capturing start event, may obtain image frames 510 output from a plurality of image sensors, and time stamps for the respective image frames 510. For example, referring to FIG. 5, at least one processor, in response to a capturing start event, may obtain a first time stamp for a first image frame 511 from a first image sensor A and obtain a second time stamp for a second image frame 512 from a second image sensor B.

In the disclosure, the "time stamp" may represent a time point at which each image frame is obtained (or output) through each of the plurality of image sensors. For example, the first time stamp may represent a time point t1 at which the first image frame 511 is obtained through the first image sensor A. For example, the second time stamp may represent a time point t1 at which the second image frame 512 is obtained through the second image sensor B. For example, the third time stamp may represent a time point t2 at which the third image frame 513 is obtained through the first image sensor A.

According to an embodiment, at least one processor, based on the obtained time stamps, may control the timing at which an image frame of at least one of the plurality of image sensors (e.g., the first image sensor A and the second image sensor B) is output. For example, at least one processor may control at least one of the plurality of image sensors so that subsequent image frames are output at one or more different time points. For example, at least one processor, based on the obtained first and second time stamps, may control the first image sensor A and the second image sensor B so that the third image frame 513 and the fourth image frame 514 are output at different time points. For example, at least one processor may control the timing at which the third image frame 513 is output and/or the timing at which the fourth image frame 514 is output.

For example, at least one processor may compare the obtained time stamps. For example, at least one processor may generate a difference value between the first time stamp and the second time stamp.

For example, at least one processor may determine whether a value obtained by comparing the obtained time stamps falls within a specified range. For example, at least one processor may determine whether the difference value between the first time stamp and the second time stamp falls within a specified range. For example, referring to FIG. 5, the difference value between the first time stamp and the second time stamp may be 0. Based on the generated difference value falling within the specified range, at least one processor may control the output time point of at least one image frame of the first image sensor A or the second image sensor B. For example, when the generated difference value falls within the specified range, at least one processor may control the output time point of the second image sensor B. For example, referring to FIG. 5, at least one processor may delay the output time point of the fourth image frame 514 following the second image frame 512 of the second image sensor B to be later than the output time point of the third image frame 513. For example, the output time point of the fourth image frame 514 may be later than the output time point t2 of the third image frame 513 following the first image frame 511 of the first image sensor A. Therefore, subsequent image frames 520 may be output at one or more different time points. For example, the third image frame 513 and the fourth image frame 514 may be output at different time points.

According to an embodiment, at least one processor, based on the time stamps of the image frames 520 output at different time points, may control at least one of the plurality of image sensors so that subsequent image frames are output at one or more different time points. For example, at least one processor, based on the third and fourth time stamps, may control the first image sensor A and the second image sensor B so that the fifth image frame 515 and the sixth image frame 516 are output at different time points.

For example, at least one processor may compare the obtained time stamps. For example, at least one processor may generate a difference value between the third time stamp and the fourth time stamp.

For example, at least one processor may determine whether a value obtained by comparing the obtained time stamps falls within a specified range. For example, at least one processor may determine whether a difference value between the third time stamp and the fourth time stamp falls within a specified range. Based on the generated difference value falling within the specified range, at least one processor may control the output time point of each of the image frames of the plurality of image sensors. For example, based on the generated difference value falling within the specified range, at least one processor may control the output time point of at least one image frame of the first image sensor A or the second image sensor B. For example, at least one processor may control the output time point of the second image sensor B when the generated difference value falls within a specified range. For example, referring to FIG. 5, at least one processor may generate a difference value between the third time stamp and the fourth time stamp. At least one processor, based on the difference value falling within the specified range, may further delay the output time point of the sixth image frame 516 subsequent to the fourth image frame 514 of the second image sensor B. For example, the difference between the output time point t3 of the fifth image frame 515 and the output time point of the sixth image frame 516 may be greater than the difference between the output time point t2 of the third image frame 513 and the output time point of the fourth image frame 514. For example, referring to the first region S1, the interval between the first time stamp and the third time stamp may be equal to the interval between the third time stamp and the fifth time stamp. The interval between the second time stamp and the fourth time stamp may be smaller than the interval between the fourth time stamp and the sixth time stamp.

According to an embodiment, at least one processor may maintain the output time points of the plurality of image frames constant, based on the generated difference value not falling within the specified range. For example, at least one processor, based on the generated difference value falling outside the specified range, may maintain the output time points of image frames of the first image sensor A and the second image sensor B constant. For example, when the generated difference value falls outside the specified range, at least one processor may maintain the output time point of the second image sensor B constant.

For example, referring to FIG. 5, at least one processor may generate a difference value between the fifth time stamp and the sixth time stamp. At least one processor, the difference value falling outside the specified range, may maintain the output time point of the second image sensor B constant. For example, after the output time point t3 of the fifth image frame 515, the interval between the image frame output through the first image sensor A and the image frame output through the second image sensor B may be constant.

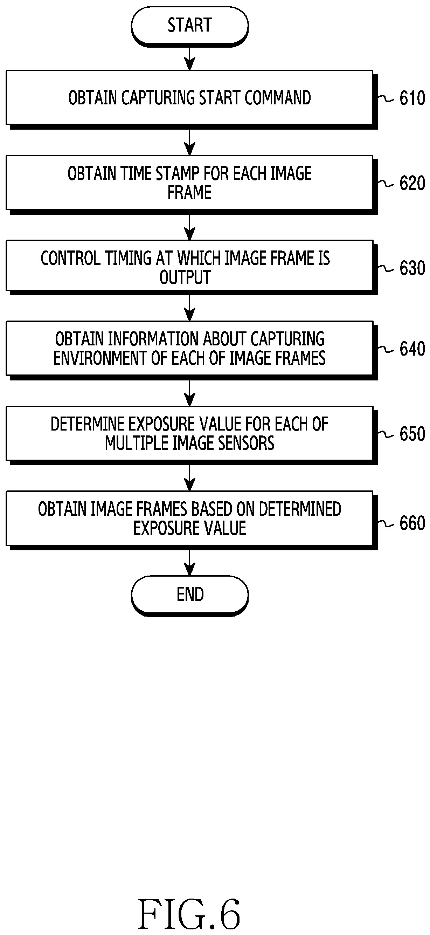

FIG. 6 is a flowchart illustrating the operation of an electronic device according to an embodiment.

The electronic device and its components in FIG. 6 may be referenced by the electronic device and its components in FIGS. 1 to 5 described above. The same terminology is used for components that are identical or substantially identical to those described above, and redundant descriptions thereof will be omitted.

According to an embodiment, the operation of the electronic device may include an operation 610 of obtaining a capturing start command, an operation 620 of obtaining a time stamp for each image frame, an operation 630 of controlling the timing at which the image frame is output, an operation 640 of obtaining information about the capturing environment of each image frame, an operation 650 of determining an exposure value for each of a plurality of image sensors, and an operation 660 of obtaining subsequent image frames, based on the determined exposure value. However, the operation of the electronic device is not limited thereto. For example, the operation of the electronic device may exclude at least one of the above-described operations, or may further include at least one operation. For example, if the timings at which the plurality of image frames are output differ, operations 620 and/or 630 may be omitted.

According to an embodiment, in operation 610, the electronic device may obtain a capturing start command. For example, the electronic device may detect the occurrence of a capturing start event. For example, in response to the capturing start command, the electronic device may determine whether a capturing start event has occurred. For example, in response to the capturing start command, the electronic device may determine whether the framerate of at least one image sensor among the plurality of image sensors is equal to or less than a specified value. The capturing start event may be defined in various ways. In an example, the capturing start event may be a capturing start input obtained from a user. For example, the detection of a selection of an icon or button mapped to the capturing start, a voice input, or the like may correspond to a recording end event. In an example, the capturing start event may include an event for outputting a preview. In an example, the capturing start event may include a case where the framerates of the plurality of image sensors are less than a specified value. For example, the capturing start event may include a case where the framerates of the plurality of image sensors are less than or equal to about 30 fps. For example, the capturing start event may include at least one of a preview event or a capture event. However, the disclosure is not limited thereto.

According to an embodiment, in operation 620, in response to the capturing start event, the electronic device may obtain image frames and time stamps for the respective image frames from the plurality of image sensors (e.g., the first image sensor A and the second image sensor B in FIG. 5). Details regarding operation 620 may be referenced by the description in FIG. 5 above.

According to an embodiment, in operation 630, the electronic device may control the timings at which image frames of the plurality of image sensors are output, based on the obtained time stamps. For example, the electronic device may control at least one of the plurality of image sensors so that image frames are output at one or more different time points. For example, the electronic device may adjust the framerate of at least one image sensor among the plurality of image sensors so that image frames are output at one or more different time points. For example, the electronic device may adjust the framerates of the first image sensor and/or the second image sensor so that the second image frame is output from the second image sensor at a second time point between a first time point at which the first image frame is output from the first image sensor and a third time point at which the third image frame is output from the first image sensor. For example, the electronic device may control the plurality of image sensors so that the difference value between the first time stamp and the second time stamp does not fall within a specified range by adjusting the framerate of at least one image sensor among the plurality of image sensors. Details regarding operation 630 may be referenced by the description in FIG. 5 above.

According to an embodiment, in operation 640, the electronic device may obtain information about the capturing environment of each of the image frames of the plurality of image sensors. For example, the electronic device may obtain information about the capturing environment of each of the image frames output at one or more different time points.

According to an embodiment, in operation 640, the electronic device may determine whether the obtained information about the capturing environment has changed. For example, the electronic device may compare the information about the capturing environment of an image frame with the information about the capturing environment of a subsequent image frame.

According to an embodiment, in operation 650, based on a change in the information about the capturing environment of the electronic device (e.g., a change in the illuminance value of the capturing environment of the electronic device), the electronic device may determine the respective exposure values of the plurality of image sensors. For example, the electronic device may obtain the respective exposure values of the plurality of image sensors. The electronic device may determine the respective exposure values of the plurality of image sensors, based on at least one of the obtained exposure values and the obtained information about the capturing environment. For example, the electronic device may determine the respective exposure values of the plurality of image sensors so that two or more of the plurality of image sensors have different exposure values. In an example, the electronic device may change the respective exposure values of the plurality of image sensors so that the determined exposure values converge to the exposure value corresponding to the changed information about the capturing environment. The respective exposure values of the plurality of image sensors may differ from the determined exposure values of the plurality of image sensors.

According to an embodiment, if the output time points of image frames respectively obtained from the plurality of image sensors are different, the electronic device may determine the respective exposure values of the plurality of image sensors so that different exposure values are applied between the output time points of the image frames. However, the disclosure is not limited thereto. For example, if the output time points of image frames obtained respectively from the plurality of image sensors are the same, the electronic device may determine the respective exposure values of the plurality of image sensors so that two or more of the plurality of image sensors have different exposure values.

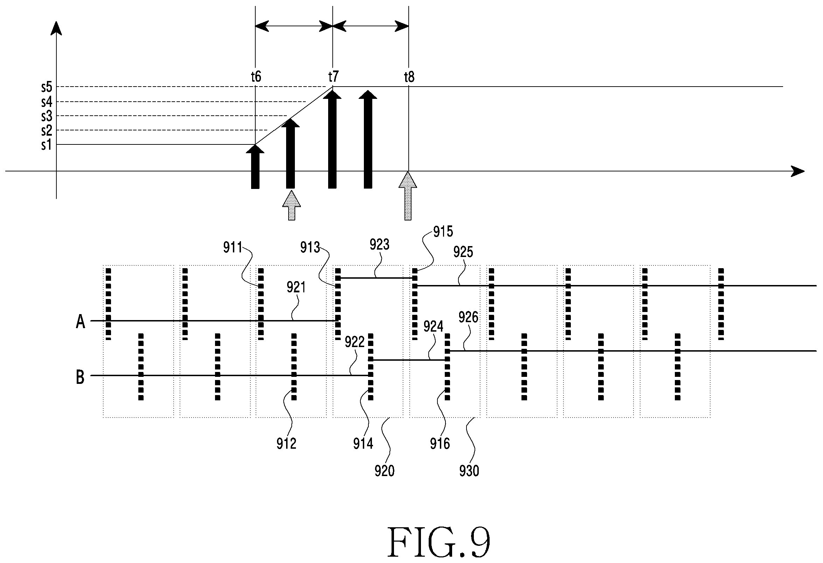

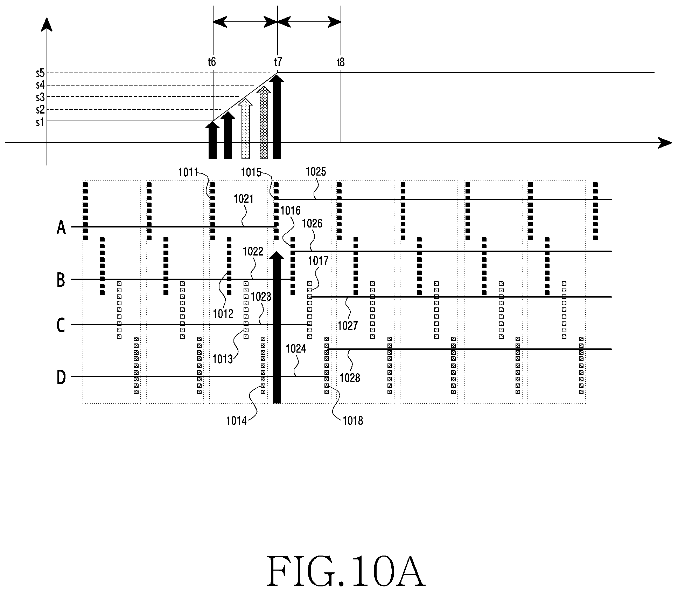

According to an embodiment, in operation 660, the electronic device may obtain subsequent image frames from the plurality of image sensors, based on the determined exposure values. For example, the electronic device may obtain subsequent image frames from the plurality of image sensors, based on the determined exposure values corresponding to the changed information about the capturing environment. Details regarding operations 640, 650, and 660 will be described in detail later with reference to FIGS. 9 and 10A.

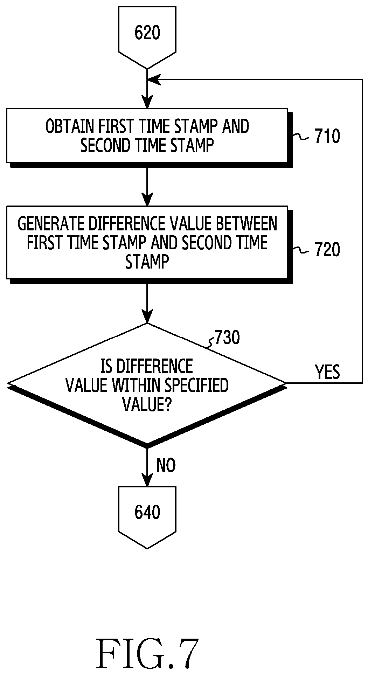

FIG. 7 is a flowchart illustrating an operation for controlling a plurality of image sensors according to an embodiment.

According to an embodiment, the process in FIG. 7 may be performed after operation 620 in FIG. 6. Operation 630 in FIG. 6 may include operations 710, 720, and 730 in FIG. 7. The processor in FIG. 7 may be referenced by the description in FIG. 5.

According to an embodiment, in operation 710, the electronic device may obtain a first time stamp for a first image frame (e.g., the first image frame 511 in FIG. 5) from a first image sensor (e.g., the first image sensor A in FIG. 5) in response to a capturing start event. In operation 710, the electronic device may obtain a second time stamp for a second image frame (e.g., the second image frame 512 in FIG. 5) from a second image sensor (e.g., the second image sensor B in FIG. 5) in response to a capturing start event. However, the disclosure is not limited thereto. For example, the electronic device may further include at least one image sensor. For example, the electronic device may obtain time stamps for a plurality of image frames from a third image sensor, and may obtain time stamps for a plurality of image frames from a fourth image sensor. For example, in operation 710, the electronic device may further obtain a time stamp for the third image frame subsequent to the second image frame from the third image sensor and a time stamp for the fourth image frame subsequent to the third image frame from the fourth image sensor.

According to an embodiment, in operation 720, the electronic device may generate a difference value between the first time stamp and the second time stamp. The difference value between the first time stamp and the second time stamp may include a time difference between a time point at which the first image frame is obtained (or output) through the first image sensor and a time point at which the second image frame is obtained (or output) through the second image sensor. In an example, referring to FIG. 5, the difference value of the first time stamp and the second time stamp may include an interval between the first image frame 511 and the second image frame 512.

According to an embodiment, in operation 730, the electronic device may determine whether the generated difference value is within a specified range. Based on the generated difference value falling within the specified range, the electronic device may control the timing at which at least one of the image frames of the first image sensor or the second image sensor is output. For example, based on the generated difference value falling within the specified range, the electronic device may further delay the output time points of the image frames of the second image sensor relative to the time points at which the image frames of the first image sensor are output. Falling within the specified range may include a case where the time difference between the time point at which the first image frame is obtained (or output) through the first image sensor and the time point at which the second image frame is obtained (or output) through the second image sensor is less than or equal to a specified time.

According to an embodiment, if the generated difference value falls within the specified range, the electronic device may repeat operations 710, 720, and 730 until it is determined that the generated difference value does not fall within the specified range. For example, the electronic device may obtain a third time stamp for the third image frame subsequent to the first image frame through the first image sensor, and obtain a fourth time stamp for the fourth image frame subsequent to the second image frame through the second image sensor. The electronic device may generate a difference value between the third time stamp and the fourth time stamp. The electronic device may determine whether the generated difference value falls within a specified range. Based on the generated difference value falling within the specified range, the electronic device may control the output time point of at least one of the image frames of the first image sensor or the second image sensor.

According to an embodiment, in operation 730, based on the generated difference value falling outside the specified range, the electronic device may maintain the output time points of the image frames of the first image sensor and the second image sensor constant. For example, based on the generated difference value falling outside the specified range, the electronic device may maintain the output time points of the image frames of the second image sensor relative to the output time points of the image frames of the first image sensor. Therefore, the interval between the time stamp for the image frame output through the first image sensor and the time stamp for the image frame output through the second image sensor may remain constant. Falling outside the specified range may include a case where the time difference between the time point at which the first image frame is obtained (or output) through the first image sensor and the time point at which the second image frame is obtained (or output) through the second image sensor is greater than a specified time.

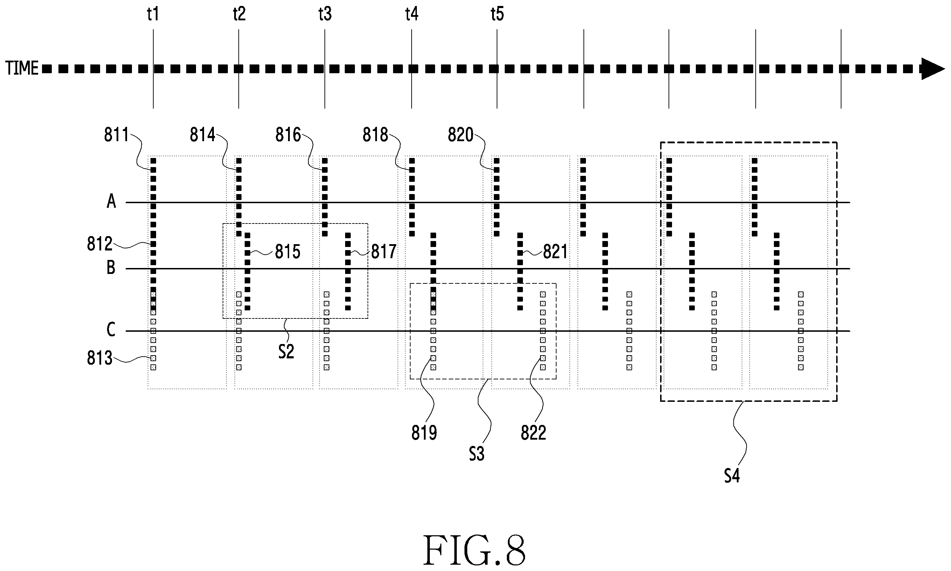

FIG. 8 is a diagram illustrating the time stamps of respective image frames obtained from a plurality of image sensors over time according to an embodiment.

The description in FIG. 8 may be referenced by the description in FIGS. 5 to 7. For example, the first image sensor A and the second image sensor B in FIG. 8 may be referenced by the first image sensor A and the second image sensor B in FIG. 8.

According to an embodiment, the electronic device may include a plurality of image sensors. For example, the electronic device may include a first image sensor A, a second image sensor B, and a third image sensor C. However, the number of image sensors included in the electronic device is not limited thereto. For example, the electronic device may further include one or more image sensors.

According to an embodiment, at least one processor may obtain image frames and time stamps for the respective image frames from a plurality of image sensor, in response to a capturing start event. For example, referring to FIG. 8, at least one processor, in response to a capturing start event, may obtain a first time stamp for a first image frame 811 from a first image sensor A, a second time stamp for a second image frame 812 from a second image sensor B, and a third time stamp for a third image frame 813 from a third image sensor C. The first time stamp may indicate a time point t1 at which the first image frame 811 is obtained through the first image sensor A. For example, the second time stamp may indicate a time point t1 at which the second image frame 812 is obtained through the second image sensor B. The third time stamp may indicate a time point t1 at which the third image frame 813 is obtained through the third image sensor C.

According to an embodiment, at least one processor may control at least one of the plurality of image sensors, based on the obtained time stamps, so that subsequent image frames are output at one or more different time points. For example, at least one processor may control the first image sensor A and the second image sensor B, based on the obtained first and second time stamps, so that a fourth image frame 814 and a fifth image frame 815 are output at different time points.

For example, at least one processor may compare the obtained time stamps. For example, at least one processor may generate a difference value between the first time stamp and the second time stamp. For example, at least one processor may determine whether the value obtained by comparing the obtained time stamps falls within a specified range. For example, at least one processor may determine whether the difference value between the first time stamp and the second time stamp falls within a specified range. For example, referring to FIG. 8, the difference value between the first time stamp and the second time stamp may be 0. At least one processor, based on the generated difference value falling within the specified range, may control the output time point of at least one of the image frames of the first image sensor A or the second image sensor B. For example, if the generated difference value falls within the specified range, at least one processor may control the output time point of the second image sensor B.

For example, referring to FIG. 8, at least one processor may delay the output time point of the fifth image frame 815, which follows the second image frame 812 of the second image sensor B, to be later than the fourth image frame 814. For example, the output time point of the fifth image frame 815 may be later than the output time point t2 of the fourth image frame 814, which follows the first image frame 811 of the first image sensor A. Therefore, the image frames may be output from the plurality of image sensors at one or more different time points. For example, the fourth image frame 814 and the fifth image frame 815 may be output at different time points.

According to an embodiment, at least one processor may control at least one of the plurality of image sensors, based on the time stamps of the image frames output at different time points, so that subsequent image frames are output at one or more different time points. For example, at least one processor may control the first image sensor A and the second image sensor B, based on the fourth and fifth time stamps, so that a sixth image frame 816 and a seventh image frame 817 are output at different time points.

For example, at least one processor may compare the obtained time stamps. For example, at least one processor may generate a difference value between the fourth time stamp and the fifth time stamp. For example, at least one processor may determine whether a value obtained by comparing the obtained time stamps falls within a specified range. For example, at least one processor may determine whether the difference value between the fourth time stamp and the fifth time stamp falls within a specified range. At least one processor may control the output time point of each of the image frames of the plurality of image sensors, based on the generated difference value falling within the specified range. For example, based on the generated difference value falling within the specified range, at least one processor may control the output time point of at least one of the image frames of the first image sensor A or the second image sensor B. For example, at least one processor may control the output time point of the second image sensor B if the generated difference value falls within the specified range. For example, referring to FIG. 8, at least one processor may generate a difference value between the fourth time stamp and the fifth time stamp. Based on the difference value falling within the specified range, at least one processor may further delay the output time point of the seventh image frame 817 subsequent to the fifth image frame 815 of the second image sensor B. For example, referring to the second region S2, the difference between the output time point t3 of the sixth image frame 816 and the output time point of the seventh image frame 817 may be greater than the difference between the output time point t2 of the fourth image frame 814 and the output time point of the fifth image frame 815. For example, the interval between the first time stamp and the fourth time stamp may be equal to the interval between the fourth time stamp and the sixth time stamp. The interval between the second time stamp and the fifth time stamp may be less than the interval between the fifth time stamp and the seventh time stamp.

According to an embodiment, at least one processor may maintain the output time points of the plurality of image frames constant, based on the generated difference value falling outside the specified range. For example, based on the generated difference value falling outside the specified range, at least one processor may maintain the output time points of the image frames of the first image sensor A and the second image sensor B constant. For example, at least one processor may maintain the output time point of the second image sensor B constant if the generated difference value falls outside the specified range.

For example, referring to FIG. 8, at least one processor may generate a difference value between the seventh time stamp and the sixth time stamp. At least one processor may maintain the output time point of the second image sensor B constant, based on the difference value falling outside the specified range. For example, the interval between the image frame output through the first image sensor A and the image frame output through the second image sensor B after the output time point t3 of the sixth image frame 816 may be constant.

According to an embodiment, based on the output time points of the image frames of the first image sensor A and the second image sensor B remaining constant, at least one of the plurality of image sensors may be controlled so that subsequent image frames are output at different time points. For example, at least one processor may control the first image sensor A and the third image sensor C so that subsequent image frames are output at different time points.

For example, at least one processor may compare the obtained time stamps. For example, at least one processor may generate a difference value between the sixth time stamp and a time stamp obtained through the third image sensor C at the same time point as the sixth time stamp. For example, at least one processor may determine whether a value obtained by comparing the obtained time stamps falls within a specified range. For example, at least one processor may determine whether the difference value between the sixth time stamp and the time stamp obtained through the third image sensor C at the same time point as the sixth time stamp falls within a specified range. At least one processor may control the output time point of at least one image frame of the first image sensor A or the third image sensor C, based on the generated difference value falling within the specified range. For example, if the generated difference value falls within the specified range, at least one processor may control the output time point of the third image sensor C.

For example, referring to FIG. 8, at least one processor may delay the output time point of the image frame of the third image sensor C to be later than those of the image frame of the first image sensor A and the image frame of the second image sensor B. Therefore, image frames may be output from the plurality of image sensors at one or more different time points.

According to an embodiment, at least one processor may control at least one of the plurality of image sensors, based on the time stamps of the image frames output at different time points, so that subsequent image frames are output at different time points. For example, at least one processor may control the first image sensor A and the third image sensor C, based on the sixth and seventh time stamps, so that a ninth image frame 819 and a seventh image frame 818 are output at different time points.

According to an embodiment, at least one processor may compare the obtained time stamps. For example, at least one processor may generate a difference value between the eighth time stamp and the ninth time stamp. For example, at least one processor may determine whether a value obtained by comparing the obtained time stamps falls within a specified range. For example, at least one processor may determine whether the difference value between the eighth time stamp and the ninth time stamp falls within a specified range. Based on the generated difference value falling within a specified range, at least one processor may control the output time point of each of the image frames of the plurality of image sensors. For example, at least one processor, based on the generated difference value falling within a specified range, may control the output time point of at least one image frame of the first image sensor A or the third image sensor C. For example, at least one processor may control the output time point of the third image sensor C if the generated difference value falls within a specified range.

For example, referring to FIG. 8, at least one processor may generate a difference values between the eighth time stamp and the ninth time stamp. At least one processor, based on the difference value falling within the specified range, may further delay the output time point of a twelfth image frame 822 subsequent to the ninth image frame 819 of the third image sensor C. For example, referring to the third region S3, the difference between the output time point t5 of the tenth image frame 820 and the output time point of the twelfth image frame 822 may be greater than the difference between the output time point t4 of the eighth image frame 818 and the output time point of the ninth image frame 819. For example, the interval between the eighth time stamp and the tenth time stamp may be equal to the interval between the sixth time stamp and the tenth time stamp. The interval between the twelfth time stamp and the ninth time stamp may be greater than the interval between the ninth time stamp and the sixth time stamp.

According to an embodiment, at least one processor may maintain the output time points of the plurality of image frames constant, based on the generated difference value falling outside the specified range. For example, based on the generated difference value falling outside the specified range, at least one processor may maintain the output time points of the image frames of the first image sensor A and the third image sensor C constant. For example, at least one processor may maintain the output time point of the third image sensor C constant if the generated difference value is not within the specified range. For example, referring to FIG. 8, at least one processor may generate a difference value between the tenth time stamp and the twelfth time stamp. At least one processor may maintain the output time point of the third image sensor C constant, based on the difference value falling outside the specified range. For example, after the output time point t5 of the tenth image frame 820, the interval between the image frame output through the first image sensor A and the image frame output through the second image sensor B, and the interval between the image frame output through the first image sensor A and the image frame output through the third image sensor C may be constant.

Referring to the fourth region S4, for example, after the output time point t5 of the tenth image frame 820, at least one processor may obtain an image frame output through the second image sensor B and an image frame output through the third image sensor C between the image frame output through the first image sensor A and the next image frame output through the first image sensor A.

For example, after the output time point t5 of the tenth image frame 820, at least one processor may obtain an image frame output through the third image sensor C and an image frame output through the first image sensor A between the image frame output through the second image sensor B and the next image frame output through the second image sensor B. For example, after the output time point t5 of the tenth image frame 820, at least one processor may obtain an image frame output through the first image sensor A and an image frame output through the second image sensor B between the image frame output through the third image sensor C and the next image frame output through the third image sensor C.

FIG. 9 is a diagram explaining an operation of determining the exposure value of each of the first image sensor A and the second image sensor B and obtaining subsequent image frames, based on the determined exposure value, according to an embodiment of the disclosure.

FIG. 9 is a diagram explaining an operation of determining the exposure value of each of the image sensors, when the time points at which the image frames are output are different between the image sensors (e.g., the first image sensor A and the second image sensor B), so that each of the image sensors has a different exposure value.

The description of FIG. 9 corresponds to operations 640, 650, and 660 in FIG. 6, and may be referenced by the descriptions of operations 640, 650, and 660 in FIG. 6. For example, the description in FIG. 9 may follow the description in FIG. 5 and/or FIG. 8. However, the disclosure is not limited thereto.

Referring to FIG. 9, image frames 920 according to an embodiment may include image frames output at different time points through a plurality of image sensors. For example, a first image frame 911 output through a first image sensor A, a second image frame 912 output through a second image sensor B and subsequent to the first image frame 911, a third image frame 913 output through the first image sensor A and following the second image frame 912, and a fourth image frame 914 output through the second image sensor B and following the third image frame 913 may be output at different time points.

According to an embodiment, at least one processor may determine an exposure value for each of the plurality of image sensors in response to obtaining information about the capturing environment of the electronic device. For example, the exposure value of subsequent image frames (e.g., image frames 930) may be determined based on at least one of information about the capturing environment of each of the output image frames (e.g., image frames 920) or the exposure value of each of the plurality of image sensors. According to an embodiment, at least one processor may determine the respective exposure values of the plurality of image sensors so that the plurality of image sensors have different exposure values from each other. Hereinafter, the operation of determining the respective exposure values of the plurality of image sensors will be described in detail.

According to an embodiment, at least one processor may obtain information about the capturing environment of the electronic device. For example, at least one processor may obtain information about the ambient brightness of the electronic device. For example, at least one processor may detect a change in the ambient brightness of the electronic device through at least one sensor (e.g., the sensor 460 in FIG. 4). For example, referring to FIG. 9, at least one processor may detect a change in the ambient brightness of the electronic device at a time point between t6 and t7.

According to an embodiment, referring to FIG. 9, the period between t6 and t7 may refer to a period in which the ambient brightness of the electronic device changes (e.g., a period in which the illuminance value of the capturing environment changes), and the period between t7 and t8 may refer to a period in which the exposure value of each of the plurality of image sensors is configured to correspond to the ambient brightness of the electronic device (e.g., the illuminance value of the capturing environment).

According to an embodiment, before the ambient brightness of the electronic device changes, the first image sensor A may have a first exposure value 921, and the second image sensor B may have a second exposure value 922. For example, the first image frame 911 may be an image frame output based on the first exposure value 921 of the first image sensor A. For example, the second image frame 912 may be an image frame output based on the second exposure value 922 of the second image sensor B.

According to an embodiment, at least one processor may obtain information (e.g., an illuminance value) about the capturing environment of each of the image frames and the exposure value of each of the plurality of image sensors. For example, referring to FIG. 9, at least one processor may obtain information s1 about the capturing environment of the first image frame 911, a first exposure value 921 of the first image sensor A, information s3 about the capturing environment of the second image frame 912, and a second exposure value 922 of the second image sensor B.

According to an embodiment, at least one processor may detect a change in the capturing environment of the electronic device (e.g., a change in the illuminance value of the capturing environment of the electronic device). For example, at least one processor may detect that the capturing environment of the electronic device has changed (e.g., the illuminance value of the capturing environment of the electronic device has changed) after a time point (a time point between t6 and t7) at which the capturing environment of the electronic device is changed. For example, at least one processor may obtain information about the changed capturing environment of the electronic device, based on an image frame (e.g., the second image frame 912 and/or the third image frame 913) output after a time point (a time point between t6 and t7) at which the capturing environment of the electronic device is changed. For example, at least one processor may compare the information s1 about the capturing environment of the first image frame 911 with the information s2 about the capturing environment of the second image frame 912. At least one processor may detect that the information about the capturing environment of the electronic device has changed, based on a result of comparing the information s1 about the capturing environment of the first image frame 911 with the information s2 about the capturing environment of the second image frame 912.

According to an embodiment, in response to a change in the information about the capturing environment of the electronic device from the information s1 about the capturing environment to the information s2 about the capturing environment, at least one processor may determine the respective exposure values of the plurality of image sensors so that two or more of the plurality of image sensors have different exposure values. For example, at least one processor may determine a third exposure value 923 of the first image sensor A, based on at least one of the information s1 about the capturing environment of the first image frame 911, the first exposure value 921 of the first image sensor A, the information s3 about the capturing environment of the second image frame 912, or the second exposure value 922 of the second image sensor B. The third exposure value 923 may have a different value from the first exposure value 921 and/or the second exposure value 922.

According to an embodiment, at least one processor may obtain subsequent image frames from the plurality of image sensors, based on the determined exposure values. For example, at least one processor may control the first image sensor A, based on the determined third exposure value 923, to output a third image frame 913 following the second image frame 912.

According to an embodiment, at least one processor may obtain information s5 about the capturing environment of the third image frame 913. According to an embodiment, at least one processor may detect that the information about the capturing environment has changed. For example, at least one processor may compare the information s2 about the capturing environment of the second image frame 913 with the information s3 about the capturing environment of the third image frame 913. At least one processor may detect that the information about the capturing environment of the electronic device has changed, based on a result of comparing the information s2 about the capturing environment of the second image frame 912 with the information s3 about the capturing environment of the third image frame 913.

According to an embodiment, in response to a change in the information about the capturing environment of the electronic device from the information s2 about the capturing environment to the information s3 about the capturing environment, at least one processor may determine the respective exposure values of the plurality of image sensors so that two or more of the plurality of image sensors have different exposure values. For example, at least one processor may determine a fourth exposure value 924 of the second image sensor B, based on at least one of the information s2 about the capturing environment of the second image frame 912, the second exposure value 922 of the second image sensor B, the information s5 about the capturing environment of the third image frame 913, or a third exposure value 923 of the first image sensor A. At least one processor may determine a fourth exposure value 924 different from the second exposure value 922 and/or the third exposure value 923 as the exposure value of the second image sensor B. According to an embodiment, at least one processor may repeatedly perform the above process. For example, at least one processor may repeatedly perform the above process until the determined exposure values correspond to the changed information about the capturing environment.

According to an embodiment, at least one processor may obtain subsequent image frames from the plurality of image sensors, based on the determined exposure value corresponding to the changed information about the capturing environment. For example, at least one processor may determine a fifth exposure value 925 of the first image sensor A, based on at least one of the information s5 about the capturing environment of the third image frame 913, the third exposure value 923 of the first image sensor A, the information s5 about the capturing environment of the fourth image frame 914, or the determined fourth exposure value 924 of the second image sensor B. The fifth exposure value 925 of the first image sensor A may correspond to the information s5 about the changed capturing environment. For example, the determined fifth exposure value 925 may be the exposure value of the first image sensor A. For example, the determined fifth exposure value 925 may be the exposure value of the first image sensor A corresponding to the information about the capturing environment of the electronic device (e.g., the information about the ambient brightness of the electronic device, or the illuminance value of the capturing environment).

According to an embodiment, at least one processor may obtain subsequent image frames from the plurality of image sensors, based on the determined exposure values. For example, at least one processor may control the first image sensor A, based on the determined fifth exposure value 925, to output a fifth image frame 915 subsequent to the fourth image frame 914.

According to an embodiment, at least one processor may determine a sixth exposure value 926 of the second image sensor B, based on at least one of the information s5 about the capturing environment of the fourth image frame 914, the fourth exposure value 924 of the second image sensor B, the information s5 about the capturing environment of the fifth image frame 915, or the determined fifth exposure value 925 of the first image sensor A. The sixth exposure value 926 of the second image sensor B may correspond to the changed information s5 about the capturing environment. For example, the determined sixth exposure value 926 may be the exposure value of the second image sensor B. For example, the determined sixth exposure value 926 may be the exposure value of the second image sensor B corresponding to the information about the capturing environment of the electronic device (e.g., the information about the ambient brightness of the electronic device, or the illuminance value of the capturing environment).

According to an embodiment, at least one processor may obtain subsequent image frames from the plurality of image sensors, based on the determined exposure values. For example, at least one processor may control the second image sensor B to output a sixth image frame 916 subsequent to the fifth image frame 915, based on the determined sixth exposure value 926.

FIG. 10A is a diagram illustrating an operation of determining the exposure value of each of a plurality of image sensors and obtaining subsequent image frames, based on the determined exposure values, according to an embodiment.

The description in FIG. 10A may be referenced by the description in FIG. 9 above.

Referring to FIG. 10A, an electronic device according to an embodiment may include a plurality of image sensors. For example, the electronic device may include a first image sensor A, a second image sensor B, a third image sensor C, and a fourth image sensor D.

Referring to FIG. 10A, the electronic device according to an embodiment may obtain image frames output at different time points through the plurality of image sensors (for example, a first image frame 1011 output through the first image sensor A, a second image frame 1012 output through the second image sensor B and subsequent to the first image frame 1011, a third image frame 1013 output through the third image sensor C and subsequent to the second image frame 1012, a fourth image frame 1014 output through the fourth image sensor D and subsequent to the third image frame 1013, and a fifth image frame 1015 output through the first image sensor A and subsequent to the fourth image frame 1014.

According to an embodiment, at least one processor may obtain information about the capturing environment of the electronic device. For example, at least one processor may obtain information about the ambient brightness of the electronic device. For example, at least one processor may detect a change in the ambient brightness of the electronic device, based on the image frame obtained through the image sensor. For example, referring to FIG. 10A, at least one processor may detect a change in the ambient brightness of the electronic device at a time point between t6 and t7.

According to an embodiment, referring to FIG. 10A, the period between t6 and t7 may refer to a period in which the ambient brightness of the electronic device changes (e.g., a period in which the illuminance value of the capturing environment changes), and the period between t7 and t8 may refer to a period in which the exposure value of each of the plurality of image sensors is configured to correspond to the ambient brightness of the electronic device (e.g., the illuminance value of the capturing environment).

According to an embodiment, compared to the electronic device in FIG. 9, the electronic device in FIG. 10A may further include at least one image sensor. Therefore, the electronic device in FIG. 10A may obtain the exposure value for each of the plurality of image sensors corresponding to the ambient brightness of the electronic device (e.g., the illuminance value of the capturing environment) faster than the electronic device in FIG. 9 (e.g., the convergence to the exposure value of each of the plurality of image sensors may be faster). Therefore, the user may quickly obtain a stabilized preview image (e.g., having a brightness value corresponding to the ambient brightness of the electronic device and/or being clear), and the time required for the electronic device to prepare for a capture event may be shortened.

According to an embodiment, before the ambient brightness of the electronic device changes, the first image sensor A may have a first exposure value 1021, the second image sensor B may have a second exposure value 1022, the third image sensor C may have a third exposure value 1023, and the fourth image sensor D may have a fourth exposure value 1024. For example, the first image frame 1011 may be an image frame output based on the first exposure value 1021 of the first image sensor A. For example, the second image frame 1012 may be an image frame output based on the second exposure value 1022 of the second image sensor B. For example, the third image frame 1013 may be an image frame output based on the third exposure value 1023 of the third image sensor C. For example, the fourth image frame 1014 may be an image frame output based on the fourth exposure value 1024 of the fourth image sensor D.

According to an embodiment, at least one processor may obtain information (e.g., an illuminance value) about the capturing environment of the image frames and the respective exposure values of the plurality of image sensors. For example, referring to FIG. 10A, at least one processor may obtain information s1 about the capturing environment of the first image frame 1011 and a first exposure value 1021 of the first image sensor A. At least one processor may obtain information s2 about the capturing environment of the second image frame 1012 and a second exposure value 1022 of the second image sensor B. At least one processor may obtain information s3 about the capturing environment of the third image frame 1013 and a third exposure value 1023 of the third image sensor C. At least one processor may obtain information s4 about the capturing environment of the fourth image frame 1014 and a fourth exposure value 1024 of the fourth image sensor D.

According to an embodiment, at least one processor may determine the respective exposure values of the plurality of image sensors, based on at least one of the obtained information about the capturing environment or exposure values of the plurality of image sensors. For example, at least one processor may determine the respective exposure values of the plurality of image sensors, based on at least one of the obtained information about the capturing environment or the respective exposure values of the plurality of image sensors, so that two or more of the plurality of image sensors have different exposure values.

Referring to FIG. 10A, at least one processor may determine a fifth exposure value 1025 of the first image sensor A, based on at least one of the information s1 about the capturing environment of the first image frame 1011, the first exposure value 1021 of the first image sensor A, the information s2 about the capturing environment of the second image frame 1012, the second exposure value 1022 of the second image sensor B, the information s3 about the capturing environment of the third image frame 1013, the third exposure value 1023 of the third image sensor C, the information s4 about the capturing environment of the fourth image frame 1014, or the fourth exposure value 1024 of the fourth image sensor D.

In an example, the determined fifth exposure value 1025 may be the exposure value of the first image sensor A. For example, the determined fifth exposure value 1025 may be the exposure value of the first image sensor A corresponding to the information about the capturing environment of the electronic device (e.g., the information about the ambient brightness of the electronic device, or the illuminance value of the capturing environment).

Referring to FIG. 10A, at least one processor may obtain the information s2 about the capturing environment of the second image frame 1012 and the second exposure value 1022 of the second image sensor B. At least one processor may obtain the information s3 about the capturing environment of the third image frame 1013 and the third exposure value 1023 of the third image sensor C. At least one processor may obtain the information s4 about the capturing environment of the fourth image frame 1014 and the fourth exposure value 1024 of the fourth image sensor D. At least one processor may obtain the information s5 about the capturing environment of the fifth image frame 1015 and the determined fifth exposure value 1025 of the first image sensor A.

According to an embodiment, at least one processor may determine a sixth exposure value 1026 of the second image sensor B, based on at least one of the information s2 about the capturing environment of the second image frame 1012, the second exposure value 1022 of the second image sensor B, the information s3 about the capturing environment of the third image frame 1013, the third exposure value 1023 of the third image sensor C, the information s4 about the capturing environment of the fourth image frame 1014, the fourth exposure value 1024 of the fourth image sensor D, the information s5 about the capturing environment of the fifth image frame 1015, or the determined fifth exposure value 1025 of the first image sensor A.

In an example, the determined sixth exposure value 1026 may be the exposure value of the second image sensor B. For example, the determined sixth exposure value 1026 may be the exposure value of the second image sensor B corresponding to the information about the capturing environment of the electronic device (e.g., the information about the ambient brightness of the electronic device, or the illuminance value of the capturing environment).

Referring to FIG. 10A, at least one processor may obtain the information s3 about the capturing environment of the third image frame 1013 and the third exposure value 1023 of the third image sensor C. At least one processor may obtain the information s4 about the capturing environment of the fourth image frame 1014 and the fourth exposure value 1024 of the fourth image sensor D. At least one processor may obtain the information s5 about the capturing environment of the fifth image frame 1015 and the determined fifth exposure value 1025 of the first image sensor A. At least one processor may obtain the information s5 about the capturing environment of the sixth image frame 1016 and the sixth exposure value 1026 of the second image sensor B.

According to an embodiment, at least one processor may determine a seventh exposure value 1027 of the third image sensor C, based on at least one of the information s3 about the capturing environment of the third image frame 1013, the third exposure value 1023 of the third image sensor C, the information s4 about the capturing environment of the fourth image frame 1014, the fourth exposure value 1024 of the fourth image sensor D, the information s5 about the capturing environment of the fifth image frame 1015, the determined fifth exposure value 1025 of the first image sensor A, the information s5 about the capturing environment of the sixth image frame 1016, or the sixth exposure value 1026 of the second image sensor B.

In an example, the determined seventh exposure value 1027 may be the exposure value of the third image sensor C. For example, the determined seventh exposure value 1027 may be the exposure value of the third image sensor C corresponding to the information about the capturing environment of the electronic device (e.g., the information about the ambient brightness of the electronic device, or the illuminance value of the capturing environment).

Referring to FIG. 10A, at least one processor may obtain the information s4 about the capturing environment of the fourth image frame 1014 and the fourth exposure value 1024 of the fourth image sensor D. At least one processor may obtain the information s5 about the capturing environment of the fifth image frame 1015 and the determined fifth exposure value 1025 of the first image sensor A. At least one processor may obtain the information s5 about the capturing environment of the sixth image frame 1016 and the sixth exposure value 1026 of the second image sensor B. At least one processor may obtain the information s5 about the capturing environment of the seventh image frame 1017 and the seventh exposure value 1027 of the third image sensor C.

According to an embodiment, at least one processor may determine an eighth exposure value 1028 of the fourth image sensor D, based on at least one of the information s4 about the capturing environment of the fourth image frame 1014, the fourth exposure value 1024 of the fourth image sensor D, the information s5 about the capturing environment of the fifth image frame 1015, the determined fifth exposure value 1025 of the first image sensor A, the information s5 about the capturing environment of the sixth image frame 1016, the sixth exposure value 1026 of the second image sensor B, the information s5 about the capturing environment of the seventh image frame 1017, and the seventh exposure value 1027 of the third image sensor C.

In an example, the determined eighth exposure value 1028 may be the exposure value of the fourth image sensor D. For example, the determined eighth exposure value 1028 may be the exposure value of the fourth image sensor D corresponding to the information about the capturing environment of the electronic device (e.g., the information about the ambient brightness of the electronic device, or the illuminance value of the capturing environment).

According to an embodiment, at least one processor may obtain subsequent image frames from the plurality of image sensors, based on the determined exposure values. For example, at least one processor may control the first image sensor A, based on the determined fifth exposure value 1025, to output a fifth image frame 1015 subsequent to the fourth image frame 1014.

For example, at least one processor may control the second image sensor B, based on the determined sixth exposure value 1026, to output a sixth image frame 1016 subsequent to the fifth image frame 1015.

For example, at least one processor may control the third image sensor C, based on the determined seventh exposure value 1027, to output a seventh image frame 1017 subsequent to the sixth image frame 1016.

For example, at least one processor may control the fourth image sensor D, based on the determined eighth exposure value 1028, to output an eighth image frame 1018 subsequent to the seventh image frame 1017.

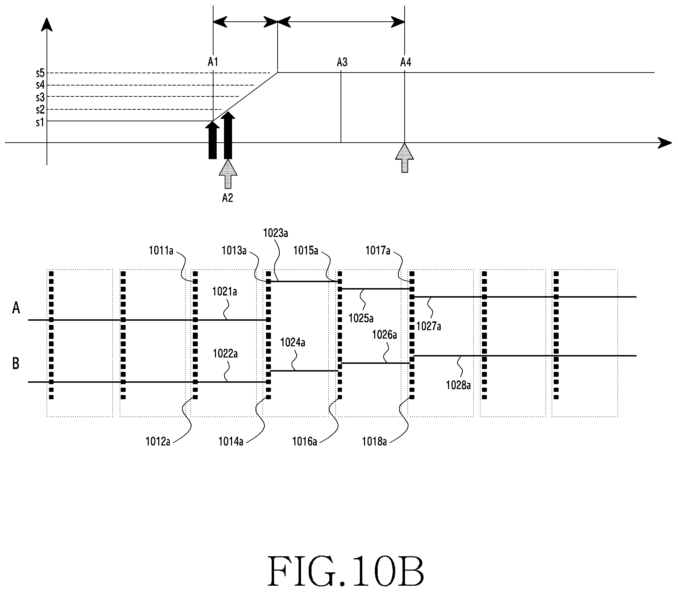

FIG. 10B is a diagram illustrating an operation of determining an exposure value when image frames are obtained from the first image sensor and the second image sensor at the same time point according to an embodiment.

The description in FIG. 10B may be referenced by the descriptions in FIGS. 1 to 10A above.

FIG. 10B is a diagram illustrating an operation of determining the respective exposure values of the plurality of image sensors so that the plurality of image sensors have different exposure values when the time points at which the image frames are output are the same for the plurality of image sensors.

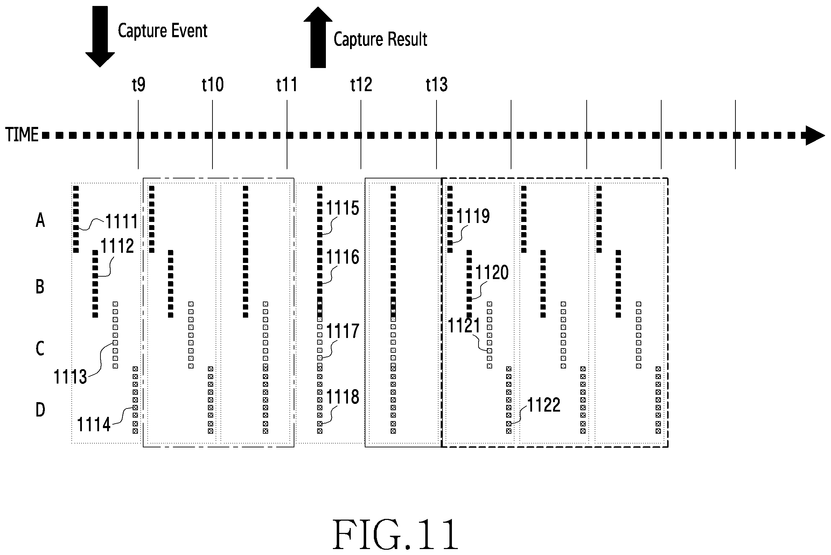

According to an embodiment, the time points at which the image frames of the plurality of image sensors are output may be the same. For example, when a capture event occurs (refer to the description in FIG. 11 below), the time points at which the image frames of the plurality of image sensors are output may be the same. For example, referring to FIG. 10B, the time point A1 at which the first image frame 101 1a of the first image sensor A is output may be the same as the time point A1 at which the second image frame 1012a is output.

According to an embodiment, at least one processor may detect a change in the capturing environment of the electronic device (e.g., a change in the illuminance value of the capturing environment of the electronic device). For example, at least one processor may detect a change in the capturing environment of the electronic device (e.g., a change in the illuminance value of the capturing environment of the electronic device) after a time point A2 at which the capturing environment of the electronic device changes. For example, at least one processor may obtain information about the changed capturing environment of the electronic device, based on an image frame (e.g., a third image frame 1013a and/or a fourth image frame 1014a) output after the time point A2 at which the capturing environment of the electronic device changes.

For example, at least one processor may compare information s1 about the capturing environment of the first image frame 1011a with information s5 about the capturing environment of the third image frame 1013a. At least one processor may detect a change in the information about the capturing environment of the electronic device, based on a result of comparing the information s1 about the capturing environment of the first image frame 1011a with the information s5 about the capturing environment of the third image frame 1013a.

For example, at least one processor may compare information s1 about the capturing environment of the second image frame 1012a with information s5 about the capturing environment of the fourth image frame 1014a. For example, at least one processor may also compare the information s1 about the capturing environment of the first image frame 1011a with the information s5 about the capturing environment of the fourth image frame 1014a. For example, at least one processor may compare the information s1 about the capturing environment of the second image frame 1012a with the information s5 about the capturing environment of the third image frame 1013a.

According to an embodiment, in response to a change in the information about the capturing environment of the electronic device from the information s1 about the capturing environment to the information s5 about the capturing environment, at least one processor may determine the respective exposure values of the plurality of image sensors so that two or more of the plurality of image sensors have different exposure values. For example, at least one processor may determine the exposure value of the first image sensor A from the first exposure value 1021a to the third exposure value 1023a. At least one processor may determine the exposure value of the second image sensor B from the second exposure value 1022a to the fourth exposure value 1024a. At least one processor may determine the exposure value of the first image sensor A differently from the exposure value of the second image sensor B. For example, the third exposure value 1023a and the fourth exposure value 1024a may be different from each other.

According to an embodiment, at least one processor may determine the exposure values of the first image sensor A and the second image sensor B (e.g., exposure values corresponding to the information about the changed capturing environment), based on the third exposure value 1023a and/or the fourth exposure value 1024a. For example, at least one processor may determine the exposure value of the first image sensor A as a fifth exposure value 1025a and determine the exposure value of the second image sensor B as a sixth exposure value 1026a, based on the third exposure value 1023a and/or the fourth exposure value 1024a.

According to an embodiment, at least one processor may determine the exposure values of the first image sensor A and the second image sensor B so that the exposure values of the first image sensor A and the second image sensor B converge to exposure values corresponding to the information about the capturing environment. According to an embodiment, at least one processor may repeatedly perform the above process. For example, at least one processor may repeatedly perform the above process until the determined exposure values correspond to the information about the changed capturing environment. For example, at least one processor may determine the exposure value of the first image sensor A as a seventh exposure value 1027a and determine the exposure value of the second image sensor B as an eighth exposure value 1028a, based on the fifth exposure value 1025a and/or the sixth exposure value 1026a.

For example, the seventh exposure value 1027a of the first image sensor A may correspond to the information s5 about the changed capturing environment. For example, the determined seventh exposure value 1027a may be the exposure value of the first image sensor A. For example, the determined seventh exposure value 1027a may be the exposure value of the first image sensor A corresponding to the information about the capturing environment of the electronic device (e.g., the information about the ambient brightness of the electronic device, or the illuminance value of the capturing environment).

For example, the eighth exposure value 1028a of the second image sensor B may correspond to the information s5 about the changed capturing environment. For example, the determined eighth exposure value 1028a may be the exposure value of the second image sensor B. For example, the determined eighth exposure value 1028a may be the exposure value of the second image sensor B corresponding to the information about the capturing environment of the electronic device (e.g., the information about the ambient brightness of the electronic device, or the illuminance value of the capturing environment).

FIG. 11 is a diagram illustrating an operation of controlling a plurality of image sensors when a capture event occurs according to an embodiment.

The description in FIG. 11 may be referenced by the descriptions in FIGS. 1 to 10B above.

According to an embodiment, an electronic device (e.g., at least one processor) may obtain a capture command (e.g., a command to start a capture event). For example, referring to FIG. 11, the electronic device may obtain a capture event at a time point prior to t9. In an example, the electronic device may perform a capture event by receiving a user's touch input on a visual object displayed on a display (e.g., the display 470 in FIG. 4). In an example, at least one processor may obtain at least one capture event following a capturing start event via the display 470. According to various embodiments, at least one processor may obtain a capture command using various configurations of the electronic device other than the display 470.

According to an embodiment, in response to the capture event, at least one processor may obtain time stamps for respective image frames output from a plurality of image sensors. For example, referring to FIG. 11, in response to the capture event, at least one processor may obtain a first time stamp for a first image frame 1111 from a first image sensor A, a second time stamp for a second image frame 1112 from a second image sensor B, a third time stamp for a third image frame 1113 from a third image sensor C, and a fourth image frame 1114 from a fourth image sensor D.

According to an embodiment, at least one processor may control at least one of the plurality of image sensors, based on the obtained time stamps, so that image frames are output from the plurality of image sensors at the same time point. For example, at least one processor may control the first image sensor A, the second image sensor B, the third image sensor C, and/or the fourth image sensor D, based on the first time stamp, the second time stamp, the third time stamp, and/or the fourth time stamp, so that the image frames are output from the first image sensor A, the second image sensor B, the third image sensor C, and the fourth image sensor D at the same time point.

A configuration for adjusting the time point at which the image frame is output from each of the plurality of image sensors according to an embodiment may be referenced by the description in FIG. 5. For example, at least one processor may adjust the framerate of at least one image sensor among the plurality of image sensors so that the image frames are output from the plurality of image sensors at the same time point.

According to an embodiment, at least one processor may obtain a captured image, based on the image frames output from the plurality of image sensors at the same time point. For example, referring to FIG. 11, the fifth image frame 1115, the sixth image frame 1116, the seventh image frame 1117, and the eighth image frame 1118 may be collectively output at a time point between t11 and 112. According to an embodiment, at least one processor may output the obtained captured image through a display (e.g., the display 470 in FIG. 4).

According to an embodiment, in response to obtaining the captured image, at least one processor may control at least one of the plurality of image sensors so that subsequent image frames are output at one or more different time points. For example, in response to obtaining the captured image, at least one processor may control the first image sensor A, the second image sensor B, the third image sensor C, and/or the fourth image sensor D so that image frames are output through the first image sensor A, the second image sensor B, the third image sensor C, and the fourth image sensor D at one or more different time points.

According to an embodiment, in response to obtaining the captured image, at least one processor may obtain time stamps for respective image frames from the plurality of image sensors. According to an embodiment, at least one processor may compare the obtained time stamps. For example, at least one processor may generate difference values of the obtained time stamps. According to an embodiment, at least one processor may determine whether the generated difference value falls within a specified range. According to an embodiment, based on the generated difference value falling within the specified range, at least one processor may control a time point at which at least one of the plurality of image sensors outputs image frames. According to an embodiment, at least one processor may maintain the time points at which the plurality of image sensors output image frames, based on the generated difference value falling outside the specified range.

According to an embodiment, the capture event merely represents an example of the disclosure, and the description in FIG. 11 is not limited to the capture event. For example, the description in FIG. 11 may be applied to various cases in which image frames are output from the plurality of image sensors at the same time point.

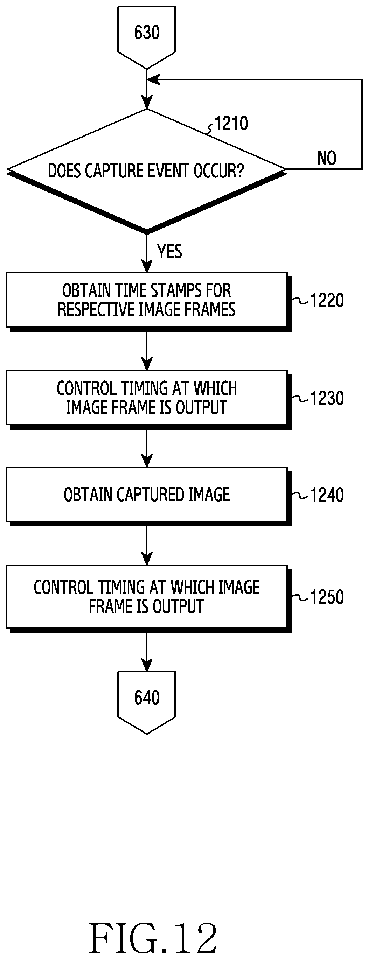

FIG. 12 is a flowchart illustrating the operation of an electronic device when a capture event occurs according to an embodiment.

The description of FIG. 12 may be referenced by that of FIG. 11. According to an embodiment, the process in FIG. 12 may be performed after operation 630 in FIG. 6.

According to an embodiment, in operation 1210, the electronic device may detect the occurrence of a capture event. The capture event may be defined in various ways. In an embodiment, the capture event may be a capture input obtained from a user. For example, detection of selection for an icon or button mapped to a capture input, a voice input, or the like may correspond to the capture event.

According to an embodiment, in operation 1220, the electronic device, in response to the occurrence of a capture event, may obtain time stamps for respective image frames output from a plurality of image sensors. In operation 1230, the electronic device may control the timing at which the image frames are output from the plurality of image frames, based on the obtained time stamps. For example, the electronic device may control at least one of the plurality of image sensors so that the image frames are output from the plurality of image sensors at the same time point. In operation 1240, the electronic device may obtain a captured image, based on the image frames output from the plurality of image sensors at the same time point.

According to an embodiment, in operation 1250, the electronic device may control the timings at which the image frames are output from the plurality of image sensors. For example, in response to obtaining the captured image, the electronic device may control at least one of the plurality of image sensors so that image frames are output from the plurality of image sensors at one or more different time points. For example, in response to obtaining the captured image, at least one processor may obtain time stamps for the respective image frames from the plurality of image sensors. According to an embodiment, at least one processor may compare the obtained time stamps. For example, at least one processor may generate difference values of the obtained time stamps. According to an embodiment, at least one processor may determine whether the generated difference value falls within a specified range. According to an embodiment, based on the generated difference value falling within the specified range, at least one processor may control a time point at which at least one of the plurality of image sensors outputs image frames. According to an embodiment, at least one processor may maintain a time point at which the plurality of image sensors output image frames, based on the generated difference value falling outside the specified range.

According to an embodiment, operation 640 in FIG. 6 may be performed after the process in FIG. 12.

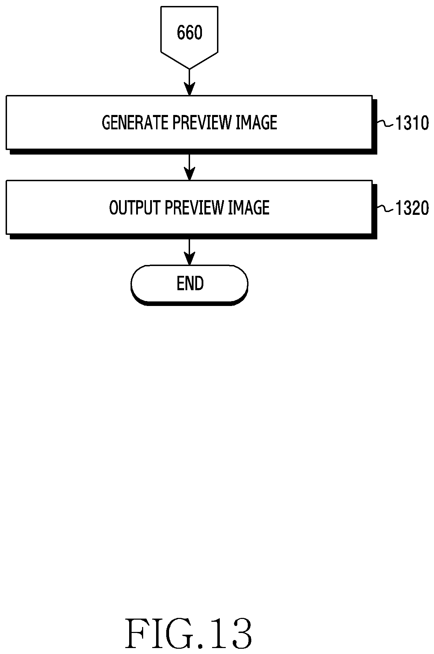

FIG. 13 is a flowchart illustrating an operation of outputting a preview image according to an embodiment.

The process in FIG. 13 may be performed after operation 660 in FIG. 6.

According to an embodiment, in operation 1310, an electronic device (e.g., at least one processor) may generate a preview image, based on at least one image frame among the image frames output from the plurality of image sensors (e.g., the image frames 930 in FIG. 9). For example, referring to FIG. 9, at least one processor may generate a preview image, based on at least one image frame among the image frames output after t8. For example, at least one processor may generate a preview image, based on the fifth image frame 915 of the first image sensor A and/or the sixth image frame 916 of the second image sensor B. In an example, the generated preview image may be a stabilized image (e.g., having a brightness value corresponding to the ambient brightness of the electronic device and/or being clear).

According to an embodiment, in operation 1320, the electronic device (e.g., at least one processor) may control a display (e.g., the display 470 in FIG. 4) to output the generated preview image. For example, the electronic device may control the display so that the stabilized preview image is output through the display. Therefore, a user may view the stabilized preview image through the display.

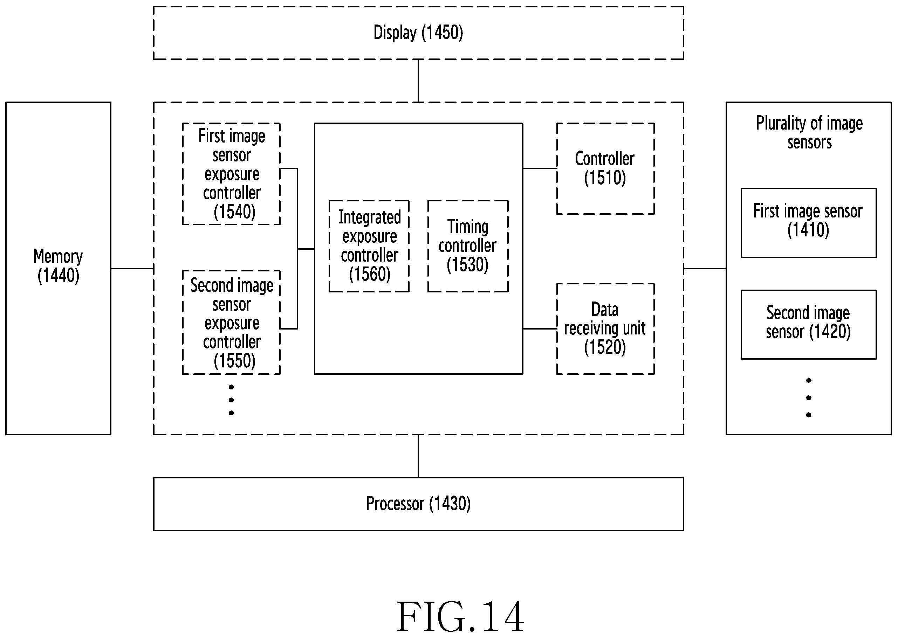

FIG. 14 is a conceptual diagram illustrating a concept of controlling a function related to capturing in an electronic device according to an embodiment.

The electronic device and its components in FIG. 14 may be referenced by the electronic device and its components in FIGS. 1 to 13 described above. The same terminology is used for components that are identical or substantially identical to those described above, and redundant descriptions will be omitted.

Referring to FIG. 14, an electronic device according to an embodiment may include a plurality of image sensors, memory 1440, and a processor 1430 electrically connected to the plurality of image sensors and the memory 1440. However, the components of the electronic device are not limited thereto. For example, the electronic device may exclude at least one of the components described above or may further include at least one other component. For example, the electronic device may further include a display 1450. According to an embodiment, the plurality of image sensors may include a first image sensor 1410 and a second image sensor 1420. However, the disclosure is not limited thereto. For example, the plurality of image sensors may further include at least one image sensor.

According to an embodiment, the electronic device may utilize hardware and/or software units to support various capturing-related functions. For example, the processor 1430 may execute commands stored in the memory 1440 and include a controller 1510, a data receiving unit 1520, a timing controller 1530, a first image sensor exposure controller 1540, a second image sensor exposure controller 1550, and an integrated exposure controller 1560. In various embodiments, a software unit different from that illustrated in FIG. 14 may be implemented. For example, at least two components may be integrated into a single component, or a single component may be split into two or more components. Furthermore, since the hardware and software units share a single function, work performance may be improved. For example, the electronic device may include both hardware-implemented encoders and software-implemented encoders, and some of the data obtained through at least one camera device may be processed by the hardware encoder, and the remaining portion may be processed by the software encoder.

In an embodiment, the controller 1510 may control a plurality of image sensors (e.g., the first image sensor 1410 and the second image sensor 1420) to output an image frame (e.g., the fifth image frame 915 in FIG. 90 related to a preview. In an embodiment, the controller 1510 may adjust the framerate of at least one of the plurality of image sensors. In an embodiment, the controller 1510 may adjust an ISO value.

In an embodiment, the data receiving unit 1520 may obtain image frames from a plurality of image sensors (e.g., the first image sensor 1410 and the second image sensor 1420). According to an embodiment, the data receiving unit 1520 may generate time stamps for respective image frames of a plurality of image sensors, which are obtained from the plurality of image sensors. In an example, the data receiving unit 1520 may transmit the obtained image frames to a processor 1430 (e.g., an ISP).

In an embodiment, the timing controller 1530 may control the time points at which the image frames are output from the plurality of image sensors. For example, the timing controller 1530 may control at least one of the plurality of image sensors to output an image frame at a time point determined based on the time stamps of the image frames obtained through the data receiving unit 1520. For example, the timing controller 1530 may determine the time points at which the plurality of image sensors output image frames, based on the time stamps of the respective image frames of the plurality of image sensors, which are generated by the data receiving unit 1520.

In an embodiment, the image sensor exposure controller may determine the respective exposure values of the plurality of image sensors, based on at least one of information about the capturing environment of the image frames output from the plurality of image sensors or the respective exposure values of the plurality of image sensors. For example, the first image sensor exposure controller 1540 may determine the exposure value of the first image sensor 1410, based on at least one of information about the capturing environment of the image frames output from the first image sensor 1410 or the exposure value of the first image sensor. For example, the second image sensor exposure controller 1550 may determine the exposure value of the second image sensor 1420, based on at least one of information about the capturing environment of image frames output from the first image sensor 1410 or the exposure value of the first image sensor. In an embodiment, the image sensor exposure controller may include a first image sensor exposure controller 1540 and a second image sensor exposure controller 1550. However, the disclosure is not limited thereto. For example, the image sensor exposure controller may further include at least one image sensor exposure controller.

According to an embodiment, the integrated exposure controller 1560 may determine an integrated exposure value, based on the determined exposure value of the first image sensor and the exposure value of the second image sensor. The integrated exposure controller 1560 may compare the determined integrated exposure value with an illuminance value obtained from the image sensors. For example, the integrated exposure controller 1560 may compare the determined integrated exposure value with a first illuminance value obtained from the first image sensor and a second illuminance value obtained from the second image sensor. According to an embodiment, the integrated exposure controller 1560, based on the comparison result, may determine at least one of an exposure value, an ISO value, or a shutter speed value to be applied to subsequently output image frames. For example, the integrated exposure controller 1560 may determine at least one of an exposure value, an ISO value, or a shutter speed value to be applied to subsequently output image frames in response to detecting a change in illuminance. According to an embodiment, the integrated exposure controller 1560 may transmit at least one of the determined exposure value, ISO value, or shutter speed value to the image sensors that obtain subsequently output image frames.

In the embodiment in FIG. 14, the functions performed by the controller 1510, the data receiving unit 1520, the timing controller 1530, the first image sensor exposure controller 1540, the second image sensor exposure controller 1550, and the integrated exposure controller 1560 may be understood as being performed by the processor 1430 executing instructions stored in the memory 1440. Furthermore, in various embodiments, the electronic device may utilize one or more hardware processing circuits to perform the various functions and operations disclosed in this document. For example, an application processor (AP) included in a mobile device, an image signaling processor (ISP) mounted on a camera module, a DDIC, a touch IC, a communication processor (CP), a hardware encoder, and the like may be utilized to implement the various embodiments disclosed in this document. In this document, the processor 1430 may be understood to include at least one processor described above.

Additionally, the hardware/software connection relationships illustrated in FIG. 14 are presented for convenience of explanation and do not limit the flow/direction of data or commands. Components included in an electronic device may have various electrical/operational connection relationships.

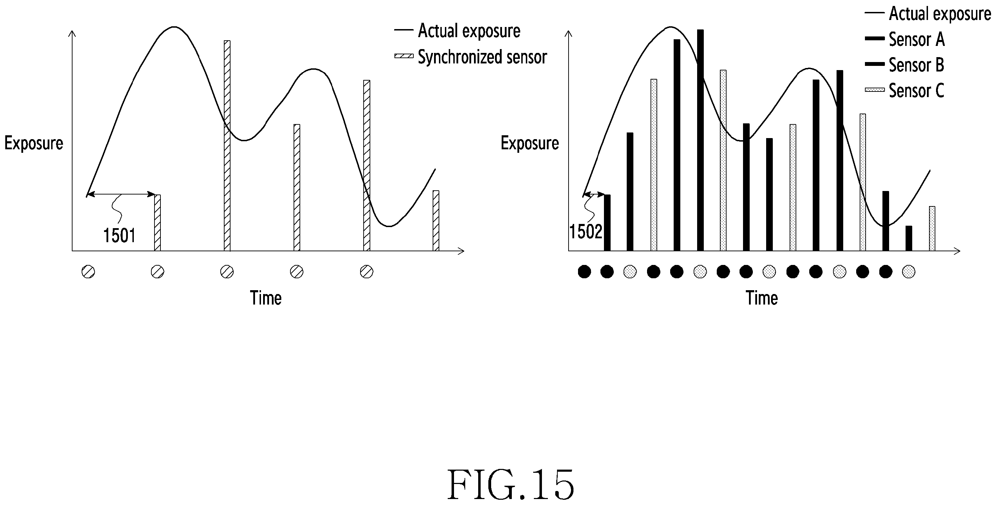

FIG. 15 is a diagram comparing a case where image frames are not output at one or more different time points and a case where image frames are output at one or more different time points according to an embodiment.

The graph illustrated on the left side in FIG. 15 may be a graph (e.g., a graph related to the prior art) showing a change in the exposure value of an image sensor when image frames are not output at one or more different time points. The graph illustrated on the right side in FIG. 15 may be a graph showing a change in the exposure value of an image sensor when image frames are output at one or more different time points.

Referring to the left graph in FIG. 15, an electronic device may obtain an exposure value from a single image sensor. For example, an electronic device according to a comparative embodiment may obtain an exposure value from a single image sensor, thereby being delayed by as much as the framerate of the image sensor. The electronic device according to the comparative embodiment may obtain the exposure value from the image sensor for a first period of time 1501.

On the other hand, referring to the right graph in FIG. 15, the electronic device according to the disclosure may obtain the exposure values of the plurality of image sensors at different time points from the plurality of image sensors, respectively. As the electronic device according to the disclosure obtains the exposure values of the plurality of image sensors at different time points from the plurality of image sensors, respectively, the electronic device may obtain the exposure value from the image sensor for a second period of time 1502, which is smaller than the first period of time 1501.

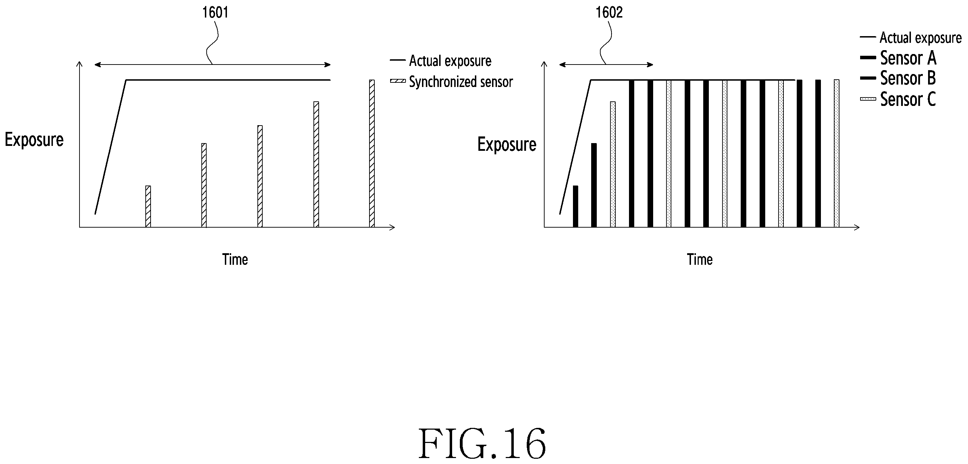

FIG. 16 is a diagram comparing a case where image frames are not output at one or more different time points and a case where image frames are output at one or more different time points according to an embodiment.

Referring to the left graph in FIG. 16, an electronic device according to the comparative embodiment may obtain the exposure value from a single image sensor. In the electronic device according to the comparative embodiment, the time for obtaining the exposure value of the image sensor may be a third period of time 1601.

On the other hand, referring to the right graph in FIG. 16, the electronic device of the disclosure may obtain the exposure values of the plurality of image sensors at different time points from the plurality of image sensors, respectively. As the electronic device according to the disclosure obtains the exposure values of the plurality of image sensors at different time points from the plurality of image sensors, respectively, the electronic device may obtain the exposure value of the image sensor for a fourth period of time 1602, which is shorter than the third period of time 1601. Therefore, the electronic device of the disclosure may reduce the time for obtaining the exposure value of the image sensor over a certain period of time. Therefore, the time for a user to obtain a stabilized preview image may be reduced.

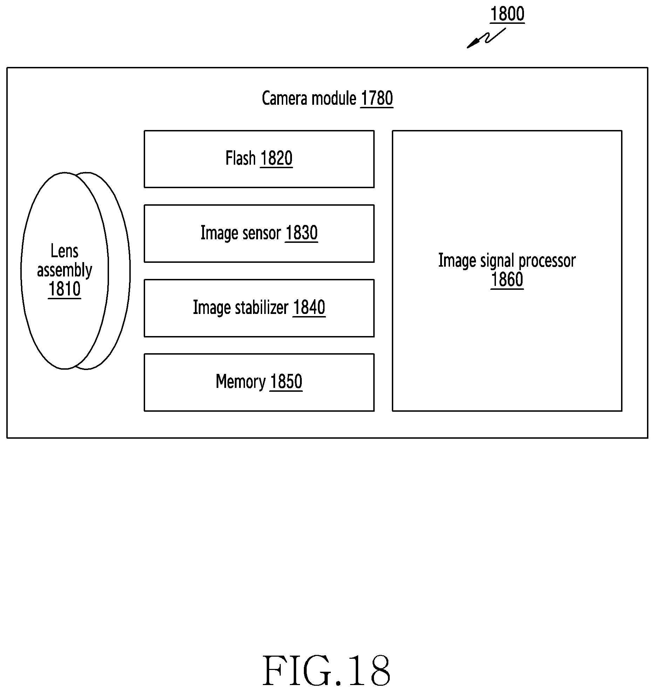

Hereinafter, devices to which various embodiments disclosed in this document may be applied or extended will be described in detail and expanded with reference to FIGS. 17 and 18.

FIG. 17 is a block diagram of an electronic device 1701 within a network environment 1700 according to various embodiments.

Referring to Fig. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input 17module 1750, a sound output 17module 1755, a display 17module 1760, an audio module 1770, a sensor module 1776, an interface 1777, a connecting terminal 1778, a haptic module 1779, a camera module 1780, a power management module 1788, a battery 1789, a communication module 1790, a subscriber identification module(SIM) 1796, or an antenna module 1797. In some embodiments, at least one of the components (e.g., the 1717connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760). 1717

The processor 1720 may execute, for example, software (e.g., a program 1740) to control at least one other component (e.g., a hardware or software component) of the electronic device 1701 coupled with the processor 1720, and may perform various data processing or computation. According to one embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display 17module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thererto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input 17module 1750 may receive a command or data to be used by another component (e.g., the processor 1720) of the electronic device 1701, from the outside (e.g., a user) of the electronic device 1701. The input 17module 1750 may include, for example, a microphone, a mouse, a keyboard, a key (e.g., a button), or a digital pen (e.g., a stylus pen).

The sound output 17module 1755 may output sound signals to the outside of the electronic device 1701. The sound output 17module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display 17module 1760 may visually provide information to the outside (e.g., a user) of the electronic device 1701. The display 17module 1760 may include, for example, a display, a hologram device, or a projector and control circuitry to control a corresponding one of the display, hologram device, and projector. According to an embodiment, the display 17module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input 17module 1750, or output the sound via the sound output 17module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, a HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to one embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example. The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 18 is a block diagram 1800 illustrating a camera module 1780 according to various embodiments.

Referring to FIG. 18, the camera module 1780 may include a lens assembly 1810, a flash 1820, an image sensor 1830, an image stabilizer 1840, memory 1850 (e.g., a buffer memory), or an image signal processor 1860. The lens assembly 1810 may collect light emitted from a subject to be captured for an image. The lens assembly 1810 may include one or more lenses. According to an embodiment, the camera module 1780 may include a plurality of lens assemblies 1810. In this case, the camera module 1780 may form, for example, a dual camera, a 360-degree camera, or a spherical camera. Some of the plurality of lens assemblies 1810 may have the same lens properties (e.g., field of view, focal length, autofocus, f-number, or optical zoom), or at least one lens assembly may have one or more lens properties that differ from the lens properties of other lens assemblies. The lens assembly 1810 may include, for example, a wide-angle lens or a telephoto lens.

The flash 1820 may emit light used to enhance light emitted or reflected from a subject. In an embodiment, the flash 1820 may include one or more light-emitting diodes (e.g., a red-green-blue (RGB) LED, a white LED, an infrared LED, or an ultraviolet LED) or a xenon lamp. The image sensor 1830 may convert light emitted or reflected from a subject and transmitted through the lens assembly 1810 into an electrical signal, thereby obtaining an image corresponding to the subject. According to an embodiment, the image sensor 1830 may include one image sensor selected from among image sensors having different properties, such as an RGB sensor, a black and white (BW) sensor, an IR sensor, or a UV sensor, a plurality of image sensors having the same properties, or a plurality of image sensors having different properties. Each image sensor included in the image sensor 1830 may be implemented using, for example, a charged coupled device (CCD) sensor or a complementary metal oxide semiconductor (CMOS) sensor.

The image stabilizer 1840 may move at least one lens included in the lens assembly 1810 or the image sensor 1830 in a specific direction or control the operating characteristics of the image sensor 1830 (e.g., adjust the read-out timing) in response to the movement of the camera module 1780 or an electronic device (e.g., the electronic device 1701 in FIG. 17) including the camera module 1780. This may compensate for at least some of the negative effects of movement on the captured image. According to an embodiment, the image stabilizer 1840 may detect such movement of the camera module 1780 or the electronic device 1701 using a gyro sensor (not shown) or an acceleration sensor (not shown) disposed inside or outside the camera module 1780. According to an embodiment, the image stabilizer 1840 may be implemented as, for example, an optical image stabilizer. The memory 1850 may temporarily store at least a portion of the image obtained through the image sensor 1830 for subsequent image processing operations. For example, when image acquisition is delayed due to the shutter, or when the plurality of images are obtained at high speed, the obtained original image (e.g., a Bayer-patterned image or a high-resolution image) may be stored in the memory 1850, and its copy image (e.g., a low-resolution image) may be previewed through the display module 1760. Thereafter, when a specified condition is satisfied (e.g., a user input or a system command), at least a portion of the original image stored in the memory 1850 may be obtained and processed, for example, by an image signal processor 1860. According to an embodiment, the memory 1850 may be configured as at least a portion of the memory 1730 or as a separate memory operating independently.

The image signal processor 1860 may perform one or more image processing operations on an image obtained through the image sensor 1830 or an image stored in the memory 1850. One or more image processing operations may include, for example, depth map generation, 3D modeling, panorama generation, feature extraction, image synthesis, or image compensation (e.g., noise reduction, resolution adjustment, brightness adjustment, blurring, sharpening, or softening). Additionally or alternatively, the image signal processor 1860 may perform control (e.g., exposure time control or readout timing control) on at least one (e.g., the image sensor 1830) of the components included in the camera module 1780. The image processed by the image signal processor 1860 may be stored back in the memory 1850 for further processing or provided to an external component of the camera module 1780 (e.g., the memory 1730, the display module 1760, the electronic device 1702, the electronic device 1704, or the server 1708 in FIG. 17). According to an embodiment, the image signal processor 1860 may be configured as at least a portion of the processor 1720 in FIG. 17, or a separate processor operating independently of the processor 1720. When the image signal processor 1860 is configured as a separate processor from the processor 1720, at least one image processed by the image signal processor 1860 may be displayed through the display module 1760 as it is or after undergoing additional image processing by the processor 1720.

According to an embodiment, the electronic device 1701 may include a plurality of camera modules 1780 having different properties or functions. In this case, for example, at least one of the plurality of camera modules 1780 may be a wide-angle camera, and at least another may be a telephoto camera. Similarly, at least one of the plurality of camera modules 1780 may be a front camera, and at least another may be a rear camera.

As described above, the electronic device according to an embodiment may include a plurality of image sensors, memory, and at least one processor electrically connected to the plurality of image sensors and the memory. The at least one processor may obtain image frames respectively output from the plurality of image sensors and time stamps for the respective image frames in response to a capturing start event, control a timing at which an image frame of at least one of the plurality of image sensors is output, based on the obtained time stamps, so as to control at least one of the plurality of image sensors to output subsequent image frames at one or more different time points, obtain information about the capturing environment of each of the image frames, determine respective exposure values of the plurality of image sensors, in response to a change in the information about the capturing environment of at least one of the image frames, so that two or more of the plurality of image sensors have different exposure values, and obtain image frames from the plurality of image sensors, based on the determined exposure values corresponding to the changed information about the capturing environment.

According to an embodiment, the plurality of image sensors may include a first image sensor and a second image sensor.

According to an embodiment, the at least one processor may obtain a first time stamp for a first image frame from the first image sensor and obtain a second time stamp for a second image frame from the second image sensor, in response to the capturing start event, and generate a difference value between the first time stamp and the second time stamp.

According to an embodiment, the at least one processor may control a timing at which at least one of the image frames of the first image sensor or the second image sensor is output, based on the generated difference value falling within a specified range.

According to an embodiment, the at least one processor may obtain a third image frame output through the first image sensor and a fourth image frame output through the second image sensor and subsequent to the third image frame, obtain information about the capturing environment of the third image frame and information about the capturing environment of the fourth image frame, obtain a first exposure value of the first image sensor and a second exposure value of the second image sensor, and determine an exposure value of at least one of the first image sensor or the second image sensor, in response to a change in the information about the capturing environment of at least one of image frames subsequent to the fourth image frame, so that the first exposure value of the first image sensor and the second exposure value of the second image sensor are different from each other.

According to an embodiment, the at least one processor may change the respective exposure values of the plurality of image sensors so that the respective exposure values of the plurality of image sensors converge to the determined exposure value corresponding to the changed information about the capturing environment.

According to an embodiment, the at least one processor may obtain time stamps for the respective image frames output from the plurality of image sensors in response to a capture event, and control timings at which image frames of the plurality of image sensors are output, based on the obtained time stamps, so as to control at least one of the plurality of image sensors to output subsequently image frames at the same time point.

According to an embodiment, the at least one processor may obtain a captured image, based on the image frames output from the plurality of image sensors at the same time point, and control timings at which image frames of the plurality of image sensors are output, in response to obtaining the captured image, so as to control at least one of the plurality of image sensors to output subsequent image frames at one or more different time points.

According to an embodiment, the capturing start event may include an event in which a framerate of at least one of the plurality of image sensors is equal to or less than a specified value. The at least one processor may adjust a framerate of at least one of the plurality of image sensors so that image frames are output at one or more different time points.

According to an embodiment, the information about the capturing environment may include information at least about the ambient brightness of the electronic device. The at least one processor determine respective exposure values of the plurality of image sensors, based on a change in the information about the ambient brightness of the electronic device, so that two or more of the plurality of image sensors have different exposure values from each other.

According to an embodiment, the electronic device may further include a display. The at least one processor may generate a preview image, based on at least one image frame among the image frames respectively output from the plurality of image sensors, and control the display to output the preview image.

As described above, an operating method of an electronic device including a plurality of image sensors according to an embodiment may include obtaining image frames respectively output from the plurality of image sensors and time stamps for the respective image frames in response to a capturing start event, controlling a timing at which an image frame of at least one of the plurality of image sensors is output, based on the obtained time stamps, so as to control at least one of the plurality of image sensors to output subsequent image frames at one or more different time points, obtaining information about the capturing environment of each of the image frames, determining respective exposure values of the plurality of image sensors, in response to a change in the information about the capturing environment of at least one of the image frames, so that two or more of the plurality of image sensors have different exposure values, and obtaining image frames from the plurality of image sensors, based on the determined exposure values corresponding to the changed information about the capturing environment.

According to an embodiment, the plurality of image sensors may include a first image sensor and a second image sensor.

According to an embodiment, the controlling of the plurality of image sensors may further include obtaining a first time stamp for a first image frame from the first image sensor and obtaining a second time stamp for a second image frame from the second image sensor, in response to the capturing start event, and generating a difference value between the first time stamp and the second time stamp.

According to an embodiment, the controlling of the plurality of image sensors may further include controlling a timing at which at least one of the image frames of the first image sensor or the second image sensor is output, based on the generated difference value falling within a specified range.

According to an embodiment, the operating method of the electronic device may include obtaining a third image frame output through the first image sensor and a fourth image frame output through the second image sensor and subsequent to the third image frame, obtaining information about the capturing environment of the third image frame and information about the capturing environment of the fourth image frame, obtaining a first exposure value of the first image sensor and a second exposure value of the second image sensor, and determining an exposure value of at least one of the first image sensor or the second image sensor, in response to a change in the information about the capturing environment of at least one of image frames subsequent to the fourth image frame, so that the first exposure value of the first image sensor and the second exposure value of the second image sensor are different from each other.

According to an embodiment, the operating method of the electronic device may include changing the respective exposure values of the plurality of image sensors so that the respective exposure values of the plurality of image sensors converge to the determined exposure value corresponding to the changed information about the capturing environment.

According to an embodiment, the operating method of the electronic device may further include obtaining time stamps for the respective image frames output from the plurality of image sensors in response to a capture event, controlling timings at which image frames of the plurality of image sensors are output, based on the obtained time stamps, so as to control at least one of the plurality of image sensors to output subsequently image frames at the same time point, obtaining a captured image, based on the image frames output from the plurality of image sensors at the same time point, and controlling timings at which image frames of the plurality of image sensors are output, in response to obtaining the captured image, so as to control at least one of the plurality of image sensors to output subsequent image frames at one or more different time points.

According to an embodiment, the controlling of the plurality of image sensors may include adjusting a framerate of at least one of the plurality of image sensors so that image frames are output at one or more different time points.

According to an embodiment, the electronic device may further include a display. The operating method of the electronic device may further include generating a preview image, based on at least one image frame among the image frames respectively output from the plurality of image sensors, and controlling the display to output the preview image.

In the disclosure, the functions or operations performed by an electronic device may be performed by one or more processors executing one or more instructions included in a program stored in memory. The functions or operations of the electronic device mentioned in the disclosure may be performed by a single processor executing one or more instructions, or by a combination of a plurality of processors executing one or more instructions. The processor mentioned in the disclosure may be understood to include circuit for performing operations or controlling other components of the electronic device. For example, the one or more processors may include a central processing unit (CPU), a microprocessor unit (MPU), an application processor (AP), a communication processor (CP), a neural processing unit (NPU), a system-on-chip (SoC), or an integrated circuit (IC) configured to execute one or more instructions. The one or more processors may be configured to perform the operations of the electronic device described above.

In this disclosure, a program (software module or software) may be stored in non-volatile memory including random access memory (RAM) or flash memory, read-only memory (ROM), electrically erasable programmable read-only memory (EEPROM), a magnetic disc storage device, a compact disc-ROM (CD-ROM), digital versatile discs (DVDs), or other types of optical storages, or a magnetic cassette. Alternatively, the program may be stored in memory configured as a combination of some or all of them. The memory may be configured as a single storage medium or as a combination of a plurality of storage media. The one or more instructions may be stored in a single storage medium or distributed and stored in a plurality of storage media.

## Claims

1. An electronic device comprising:
a plurality of image sensors;
a processor; and
memory configured to store instructions, wherein the instructions, when executed by the processor, are configured to cause the electronic device to:
obtain image frames respectively output from the plurality of image sensors and time stamps for the respective image frames in response to a capturing start event,
control a timing at which an image frame of at least one of the plurality of image sensors is output, based on the obtained time stamps, so as to control at least one of the plurality of image sensors to output subsequent image frames at one or more different time points,
obtain information about the capturing environment of each of the image frames, determine respective exposure values of the plurality of image sensors, in response to a change in the information about the capturing environment of at least one of the image frames, so that two or more of the plurality of image sensors have different exposure values, and
obtain image frames from the plurality of image sensors, based on the determined exposure values corresponding to the changed information about the capturing environment.

2. The electronic device of claim 1,
wherein the plurality of image sensors comprises a first image sensor and a second image sensor.

3. The electronic device of claim 2,
wherein the instructions are configured, when executed by the processor, to cause the electronic device to:
obtain a first time stamp for a first image frame from the first image sensor and obtain a second time stamp for a second image frame from the second image sensor, in response to the capturing start event, and
generate a difference value between the first time stamp and the second time stamp.

4. The electronic device of claim 3,
wherein the instructions are configured, when executed by the processor, to cause the electronic device to control a timing at which at least one of the image frames of the first image sensor or the second image sensor is output, based on the generated difference value falling within a specified range.

5. The electronic device of claim 2,
wherein the instructions are configured, when executed by the processor, to cause the electronic device to:
obtain a third image frame output through the first image sensor and a fourth image frame output through the second image sensor and subsequent to the third image frame,
obtain information about the capturing environment of the third image frame and information about the capturing environment of the fourth image frame,
obtain a first exposure value of the first image sensor and a second exposure value of the second image sensor, and
determine an exposure value of at least one of the first image sensor or the second image sensor, in response to a change in the information about the capturing environment of at least one of image frames subsequent to the fourth image frame, so that the first exposure value of the first image sensor and the second exposure value of the second image sensor are different from each other.

6. The electronic device of claim 1,
wherein the instructions are configured, when executed by the processor, to cause the electronic device to change the respective exposure values of the plurality of image sensors so that the respective exposure values of the plurality of image sensors converge to the determined exposure value corresponding to the changed information about the capturing environment.

7. The electronic device of claim 1,
wherein the instructions are configured, when executed by the processor, to cause the electronic device to:
obtain time stamps for the respective image frames output from the plurality of image sensors in response to a capture event, and
control timings at which image frames of the plurality of image sensors are output, based on the obtained time stamps, so as to control at least one of the plurality of image sensors to output subsequently image frames at the same time point.

8. The electronic device of claim 7,
wherein the instructions are configured, when executed by the processor, to cause the electronic device to:
obtain a captured image, based on the image frames output from the plurality of image sensors at the same time point, and
control timings at which image frames of the plurality of image sensors are output, in response to obtaining the captured image, so as to control at least one of the plurality of image sensors to output subsequent image frames at one or more different time points.

9. The electronic device of claim 1,
wherein the capturing start event comprises an event in which a framerate of at least one of the plurality of image sensors is equal to or less than a specified value, and
wherein the instructions are configured, when executed by the processor, to cause the electronic device to adjust a framerate of at least one of the plurality of image sensors so that image frames are output at one or more different time points.

10. The electronic device of claim 1,
wherein the information about the capturing environment comprises information at least about the ambient brightness of the electronic device, and
wherein the instructions are configured, when executed by the processor, to cause the electronic device to determine respective exposure values of the plurality of image sensors, based on a change in the information about the ambient brightness of the electronic device, so that two or more of the plurality of image sensors have different exposure values from each other.

11. The electronic device of claim 1,
further comprising a display,
wherein the instructions are configured, when executed by the processor, to cause the electronic device to
generate a preview image, based on at least one image frame among the image frames respectively output from the plurality of image sensors, and
control the display to output the preview image.

12. An operating method of an electronic device comprising a plurality of image sensors, the method comprising:
obtaining image frames respectively output from the plurality of image sensors and time stamps for the respective image frames in response to a capturing start event;
controlling a timing at which an image frame of at least one of the plurality of image sensors is output, based on the obtained time stamps, so as to control at least one of the plurality of image sensors to output subsequent image frames at one or more different time points;
obtaining information about the capturing environment of each of the image frames;
determining respective exposure values of the plurality of image sensors, in response to a change in the information about the capturing environment of at least one of the image frames, so that two or more of the plurality of image sensors have different exposure values; and
obtaining image frames from the plurality of image sensors, based on the determined exposure values corresponding to the changed information about the capturing environment.

13. The operating method of claim 12,
wherein the plurality of image sensors comprises a first image sensor and a second image sensor.

14. The operating method of claim 13,
wherein the controlling of the plurality of image sensors further comprises:
obtaining a first time stamp for a first image frame from the first image sensor and obtaining a second time stamp for a second image frame from the second image sensor, in response to the capturing start event; and
generating a difference value between the first time stamp and the second time stamp.

15. The operating method of claim 14,
wherein the controlling of the plurality of image sensors further comprises
controlling a timing at which at least one of the image frames of the first image sensor or the second image sensor is output, based on the generated difference value falling within a specified range.
